# EUROPEAN PATENT SPECIFICATION

(11) **EP 1 967 080 B1**
(45) Date of publication and mention of the grant of the patent: **02.06.2010**
(21) Application number: 08250704.7
(22) Date of filing: 29.02.2008
(51) Int. Cl.: A23L 1/226, A23L 1/236

(54) **Non-aldehyde cinnamon flavor and delivery systems therefor**
Nicht-Aldehyd-Zimtaroma und Ausgabesysteme dafür
Arôme cannelle dépourvu d'aldéhydes et ses systèmes de distribution

(30) Priority: 01.03.2007 US 892404 P; 01.03.2007 US 892413 P
(43) Date of publication of application: 10.09.2008
(73) Proprietor: Cadbury Adams USA LLC, Parsippany, NJ 07054 (US)
(72) Inventor: Harvey, Joan E., Morgantown New Jersey 19543 (US)
(74) Representative: Wilson Gunn

(56) References cited:
- EP-A- 0 466 450
- EP-A- 0 467 576

## Description

### FIELD

The present invention relates to cinnamon flavor compositions and products containing same. More particularly, the present invention relates to non-aldehyde cinnamon flavor compositions and comestibles that contain them.

### BACKGROUND

Cinnamon has been known for many years and its uses are wide ranging. It was regarded as a spice of high value by many different civilizations.

The spice known as cinnamon is the dried bark of the small evergreen tree *Cinnamomum zeylanicum* which grows in Sri Lanka and Southern India. The bark of this tree is referred to as Ceylon Cinnamon or "true cinnamon." This is to differentiate it from the bark of a related tree, *Cinnamomum cassia,* the bark of which is referred to as Chinese cinnamon. Although the spices from these two trees taste similar, connoisseurs suggest that Chinese cinnamon has a slightly bitter flavor compared to Ceylon Cinnamon. Most commercial ground cinnamon is often a mixture of true cinnamon and cassia cinnamon,

The flavor and aroma of cinnamon is due to an essential oil which typically makes up between 1 and 4 percent of the bark of the *Cinnamomum* tree. This oil contains many different components, the most abundant is cinnamaldehyde, which typically consists of between 65-75 percent of the oil.

Cinnamaldehyde, whose structure is shown below, 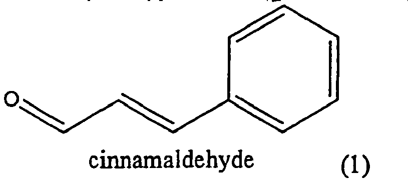 is an oily yellow liquid at room temperature with a boiling point of 246°C. Cinnamaldehyde can be made synthetically, but is more often obtained from the steam distillation of the oil of cinnamon bark. It is mainly used as a flavoring agent or as a scent.

Cinnamaldehyde is often the primary ingredient in cinnamon flavoring. Cinnamaldehyde has been added as a flavor agent to a variety of foods, including confectionery such as chewing gum. In some confectionery such as chewing gum, however, the cinnamaldehyde flavor dissipates soon after chewing. In addition, concentrated cinnamaldehyde can irritate the skin.

Furthermore, it has been found that cinnamaldehyde can react with certain high intensity sweeteners, such as dipeptide sweeteners including but not limited to aspartame. This reaction can chemically degrade the sweetener, thereby affecting the flavor.

Thus, a need exists for a longer lasting cinnamon flavor agent that can be used with dipeptide sweeteners.

EP 466 450 discloses a chewing gum composition having improved sweetener stability and comprising gum base, softener, peptide sweetener, and flavor ingredients, said flavor ingredients being present at a level of 0.1% to 10% by weight of the gum composition, said flavor ingredients comprising at least one cinnamic aldehyde acetal.

### SUMMARY OF THE INVENTION

In one aspect of the invention, there is provided a flavor composition that includes a cinnamic aldehyde ethylene glycol acetal, and at least one non-aldehyde cinnamyl compound. The non-aldehyde cinnamyl compound is selected from the group consisting of cinnamyl esters, cinnamyl acids, cinnamyl alcohols and combinations thereof. In addition, the flavor composition is free of added aldehyde. In some embodiments, there is provided a flavor composition that includes cinnamic aldehyde ethylene glycol acetal; and a non-aldehyde cinnamyl flavor mixture that includes cinnamyl alcohol, cinnamyl propionate, cinnamyl butyrate, cinnamic acid and cinnamyl acetate, wherein the composition is free of added aldehyde. In some embodiments, the flavor composition further includes a high intensity sweetener.

In some embodiments, there is provided a flavor composition that includes cinnamic aldehyde ethylene glycol acetal present in an amount of about 10% to about 75% by weight of said composition; and a non-aldehyde cinnamyl flavor mixture comprising cinnamyl alcohol cinnamyl propionate, cinnamyl butyrate, cinnamic acid and cinnamyl acetate, said flavor mixture being present in amounts of about 20% to about 80% by weight of said composition, wherein the composition is free of added aldehyde. In a preferred embodiment, the composition also includes a high intensity sweetener in an amount of about 0.001% to about 15% by weight of said composition.

In some embodiments, a comestible is provided that includes a flavor composition. The flavor composition includes a cinnamic aldehyde ethylene glycol acetal, and at least one non-aldehyde cinnamyl compound. The non-aldehyde cinnamyl compound is selected from the group consisting of cinnamyl esters, cinnamyl acids, cinnamyl alcohols and combinations thereof. In addition, the flavor composition is free of added aldehyde. The flavor composition can also include a high intensity sweetener.

In some embodiments, there is provided a confectionery composition that includes: (a) a carrier; and (b) a flavor composition. The flavor composition includes: (i) cinnamic aldehyde ethylene glycol acetal and (ii) at least one non-aldehyde cinnamyl compound selected from the group consisting of cinnamyl esters, cinnamyl acids, cinnamyl alcohols and combinations thereof: wherein the composition is free of added aldehyde. The confectionery can also include a high intensity sweetener. In a preferred embodiment, the confectionery is chewing gum.

In another aspect of the invention, there is provided a method of preparing a confectionery composition. The method includes the steps of: (a) providing a carrier; (b) providing a flavor composition that includes cinnamic aldehyde ethylene glycol acetal, and at least one non-aldehyde cinnamyl compound selected from the group consisting of cinnamyl esters, cinnamyl acids, cinnamyl alcohols and combinations thereof; and (c) mixing the flavor composition with the carrier to form a confectionery composition, wherein the confectionery composition is free of added aldehyde, In a preferred embodiment, the flavor composition further includes a high intensity sweetener.

In another aspect of the invention, a method is provided for stabilizing a flavor composition. The method includes the the steps of (a) providing a flavor composition comprising (i) cinnamic aldehyde ethylene glycol acetal; and (ii) at least one non-aldehyde cinnamyl compound selected from the group consisting of cinnamyl esters, cinnamyl acids, cinnamyl alcohols and combinations thereof; wherein the confectionery composition is free of added aldehyde; (b) providing a high intensity sweetener; and (c) combining the flavor composition with said high intensity sweetener to provide a flavor composition that is more stable than a flavor composition containing aldehyde.

### DETAILED DESCRIPTION

As described in detail herein, some embodiments provide non-aldehyde cinnamon flavor compositions. Some embodiments also provide comestibles, such as chewing gums and the like, which contain the flavor composition.

### Non-Aldehyde Cinnamon Flavor Compositions

Embodiments described herein provide a non-aldehyde cinnamon flavor composition that includes cinnamic aldehyde ethylene glycol acetal. The flavor composition also includes at least one non-aldehyde cinnamyl compound. The non-aldehyde cinnamyl group is selected from the group consisting of cinnamyl esters, cinnamyl acids, cinnamyl alcohols and combinations thereof. In addition, the flavor composition is free of added aldehyde.

Cinnamic aldehyde ethylene glycol acetal is a colorless liquid, and has the following structure: 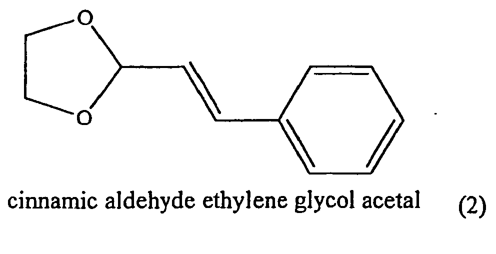 It has a molecular weight of about 176 and has a boiling point of around 265°C. Cinnamic aldeyde ethylene glycol acetal can be synthesized by condensation of cinnamic aldehyde with ethylene glycol, preferably 1,2-ethylene glycol.

The cinnamic aldehyde ethylene glycol acetal may be present in an amount, for example, of at least about 10%, preferably at least about 30% by weight of the flavor composition. The cinnamic aldehyde ethylene glycol acetal may also be present in an amount, for example, of at most about 75%, preferably at most about 60%, by weight of the flavor composition.

Throughout this specification, certain parameters are defined by maximum and minimum amounts. Each minimum amount can be combined with each maximum amount to define a range for the given parameter.

In a preferred embodiment, the flavor composition also includes a high intensity sweetener. The high intensity sweetener can be any sweetener that has a degree of sweetness higher than conventional sucrose. The high intensity sweetener can be a natural, artificial or synthetic sweetener.

The high intensity sweetener may be present in an amount, for example, of at least about 0.001%, preferably 0.01%, more preferably about 0.1% by weight of the flavor composition. The high intensity sweetener may be present in an amount, for example, of at most about 15%, preferably 10%, more preferably 5% by weight of the flavor composition.

The sweeteners involved may be selected from a wide range of materials including water-soluble sweeteners, water-soluble artificial sweeteners, water-soluble sweeteners derived from naturally occurring water-soluble sweeteners, dipeptide based sweeteners, and protein based sweeteners, including mixtures thereof. Without being limited to particular high intensity sweeteners, representative categories and examples include:
(a) water-soluble sweetening agents such as dihydrochalcones, monellin, steviosides, lo han quo, glycyrrhizin, dihydroflavenol, and sugar alcohols such as sorbitol, mannitol, maltitol, xylitol, erythritol, and L-aminodicarboxylic acid aminoalkenoic acid ester amides, such as those disclosed in U.S. Pat. No. 4,619,834, and mixtures thereof;
(b) water-soluble artificial sweeteners such as soluble saccharin salts, i.e., sodium or calcium saccharin salts, cyclamate salts, the sodium, ammonium or calcium salt of 3,4-dihydro-6-methyl-1,2,3-oxathiazine-4-one-2,2-dioxide, the potassium salt of 3,4-dihydro-6-methyl-1,2,3-oxathiazine-4-one-2,2-dioxide (Acesulfame-K), the free acid form of saccharin, and mixtures thereof;
(c) dipeptide based sweeteners, such as L-aspartic acid derived sweeteners, such as L-aspartyl-L-phenylalanine methyl ester (Aspartame), N-(N-(3,3-dimethylbutyl)-L-*-aspartyL]-L-phenylalanine 1-methyl ester (Neotame), and materials described in U.S. Pat. No. 3,492,131, L-alphaaspartyl-N-(2,2,4,4-tetramethyl-3-thietanyl)-D-alaninamide hydrate (Alitame), methyl esters of L-aspartyl-L-phenylglycerine and L-aspartyl-L-2,5-dihydrophenyl-glycine, L-aspartyl-2,5-dihydro-L-phenylalanine; L-aspartyl-L-(1-cyclohexen)-alanine, and mixtures thereof;
(d) water-soluble sweeteners derived from naturally occurring water-soluble sweeteners, such as chlorinated derivatives of ordinary sugar (sucrose), e.g., chlorodeoxysugar derivatives such as derivatives of chlorodeoxysucrose or chlorodeoxyga-lactosucrose, known, for example, under the product designation of Sucralose or Splenda^{™}; examples of chlorodeoxysucrose and chlorodeoxygalactosucrose derivatives include but are not limited to: 1-chloro-1'-deoxysucrose; 4-chloro-4-deoxy-alpha-D-galactopyranosyl-alpha-D-fructofuranoside or 4-chloro-4-deoxygalatosucrose; 4-chloro-4-deoxy-alpha-D-galactopyranosyl-1-chloro-1-deoxy-beta-D-fructo-furanoside, or 4,1'-dichloro-4,1'-dideoxygalactosucrose; 1',6'-dichoro1',6'-dideoxysucrose; 4-chlora-4-deoxy-alpha-D-galactopyranosyl-1,6-dichloro-1,6-dideoxy-beta-D- fructofuranoside, or 4,1',6'-tichloro-4,1',6'-trideoxygalactosucrose; 4,6-dichloro-4,6-dideoxy-alpha-D-galactopyranosyl-6-eldoro-6-deoxy-beta-D- fructofuranoside, or 4,6,6'-trichloro-4,6,6'-trideoxygalactosucrose; 6,1',6'-trichloro-6,1',6'-trideoxysucrose; 4,6-dichloro-4,6-dideoxy-alpha-D-galacto-pyranosyl-1,6-dichloro-1,6-dideoxy-beta-D-fructofuranoside, or 4,6,1',6'-tetrachloro4,6,1',6'-tetradeoxygalacto-sucrose; and 4,6,1'.6'-tetadeoxy-sucrose, and mixtures thereof;
(e) protein based sweeteners such as thaumaoccaus danielli (Thaumatin I and II) and talin; and
(f) the sweetener monatin (2-hydroxy-2-(indol-1-ylmethyl)-4-aminoglutaric acid) and its derivatives.

In a preferred embodiment, the high intensity sweetener is selected from the group consisting of alitame, neotame, aspartame, monellin, thaumatin, acesulfame potassium, saccharine, cyclamate, monatin, sucralose, and combinations thereof.

The intense sweetening agents may be used in many distinct physical forms well-known in the art to provide an initial burst of sweetness and/or a prolonged sensation of sweetness. Without being limited thereto, such physical forms include free forms, spray dried forms, powdered forms, beaded forms, encapsulated forms, and mixtures thereof.

In some embodiments, the amount of sweetener used in a confection can be reduced because the flavor composition free of added aldehyde does not degrade the sweetener and thus a more stable blend of flavor and sweetener results. For example, instead of adding 9,000 ppm of the dipeptide sweetener aspartame to a chewing gum containing cinnamaldehyde to permit a consumer to experience a sweetness equivalent to 4,500 ppm of aspartame after 6 months of storage at ambient temperature, a chewing gum made with a flavor composition free of added aldehyde can be prepared using 4,500 ppm of aspartame.

In some embodiments, the flavor blend can include a combination of high intensity sweeteners. For example, the flavor blend can include a combination of peptide sweeteners such as a blend of aspartame and neotame or the flavor blend can include a synergistic blend of sweeteners such as a blend of aspartame and acesulfame-K. In still other embodiments, a flavor blend can include peptide sweeteners with non-peptide sweeteners such as a blend of aspartame with sucralose.

The flavor composition also includes at least one non-aldehyde cinnamyl compound. For example, the non-aldehyde cinnamyl group is selected from the group consisting of cinnamyl esters, cinnamyl acids, cinnamyl alcohols and combinations thereof.

The non-aldehyde cinnamyl compound may be present in an amount, for example, of at least about 20%, preferably about 40%, by weight of the flavor composition. The non-aldehyde cinnamyl compound may be present in an amount, for example, of at most about 80%, preferably about 60%, by weight of the flavor composition.

The cinnamyl esters may include, for example, cinnamyl acetate, cinnamyl butyrate, cinnamyl propionate, cinnamyl anthranilate, cinnamyl isobutyrate, cinnamyl cinnamate, cinnamyl isovalerate, propyl cinnamate, isopropyl cinnamate, phenethyl cinnamate, methyl cinnamate, ethyl cinnamate, cyclohexyl cinnamate, benzyl cinnamate, cinnamyl benzoate, cinnamyl phenylacetate, allyl cinnamate, butyl cinnamate, isobutyl cinnamate, isoamyl cinnamate, heptyl cinnamate, linalyl cinnamate, terpinyl cinnamate, 3-phenylpropyl cinnamate, amylcinnamyl acetate, amylcinnamyl isovalerate, 3-phenylpropyl acetate, 3-phenylpropyl propionate, 3-phenylpropyl isobutyrate, 3-phenylpropyl isovalerate, 3-phenylpropyl hexanoate, methyl-3-phenylpropionate, ethyl-3-phenylpropionate and combinations thereof.

The cinnamyl acids may include, for example, cinnamic acid, 3-phenylpmpionic acid and combinations thereof.

The cinnamyl alcohols may include, for example, C₆-C₁₂ cinnamyl alcohols. For example, the cinnamyl alcohols may include 3-phenyl-1-propanol, amylcinnamyl alcohol, 5-phenylpentanol and combinations thereof.

In a preferred embodiment, the cinnamic aldehyde ethylene glycol is present in an amount of about 40% to about 60% by weight of the composition and a non-aldehyde cinnamyl flavor mixture of cinnamyl alcohol, cinnamyl propionate, cinnamyl butyrate, cinnamic acid and cinnamyl acetate present in an amount of about 40% to about 60% by weight of the composition. Preferably each of the cinnamyl alcohol, cinnamyl propionate, cinnamyl butyrate, cinnamic acid and cinnamyl acetate are present in the non-aldehyde cinnamyl flavor mixture in an amount of about 2% to about 50% of the flavor composition.

For example, in a preferred embodiment, the cinnamic aldehyde ethylene glycol is present in an amount of about 40% to about 60% by weight of the flavor composition, cinnamyl alcohol is present in an amount of about 5-20% by weight of the composition, cinnamyl propionate is present in an amount of about 10-50% by weight of the composition, cinnamyl butyrate is present in an amount of about 1-50% by weight of the composition, cinnamic acid is present in amount of about 5-25% by weight of the composition and cinnamyl acetate is present in an amount of about 2-15% by weight of the composition.

The flavor composition may be prepared in any suitable form. Suitable examples include, but are not limited to, a powder, liquid, gel, emulsion or a solid matrix.

In accordance with some embodiments, the cinnamic aldehyde ethylene glycol acetal is at least partially encapsulated. In other embodiments, the non-aldehyde cinnamyl compound is at least partially encapsulated. In other embodiments, the high intensity sweetener is at least partially encapsulated. In other embodiments both the cinnamic aldehyde ethylene glycol acetal, the high intensity sweetener, and the non-aldehyde cinnamyl compound are at least partially encapsulated. In a preferred embodiment, the cinnamic aldehyde ethylene glycol acetal, high intensity sweetener, and the non-aldehyde cinnamyl compound are encapsulated together.

The flavor composition or individual components of the flavor system may be encapsulated with an encapsulating material. The term "encapsulating material" includes any one or more water insoluble polymers, co-polymers, or other materials capable of forming a coating, shell, or film as a protective barrier or layer around one or more ingredients and/or capable of forming a matrix with the one or more ingredients. In some embodiments, the encapsulating material may completely surround, coat, cover, or enclose an ingredient. In other embodiments, the encapsulating material may only partially surround, coat, cover, or enclose an ingredient.

Flavor agents may also be added to the cinnamon flavor composition described above. Flavor agents which may be used include those flavors known to the skilled artisan, such as natural and artificial flavors. However, these flavor agents should exclude those that are aldehydes.

These added flavor agents may be chosen from synthetic flavor oils and flavoring aromatics and/or oils, oleoresins and extracts derived from plants, leaves, flowers, fruits, and so forth, and combinations thereof. Nonlimiting representative flavor oils include spearmint oil, cinnamon oil, oil of wintergreen (methyl salicylate), peppermint oil, clove oil, bay oil, anise oil, eucalyptus oil, thyme oil, cedar leaf oil, oil of nutmeg, allspice, oil of sage, mace, oil of bitter almonds, and cassia oil. Other useful flavorings are artificial, natural and synthetic fruit flavors such as vanilla, and citrus oils including lemon, orange, lime, grapefruit, and fruit essences including apple, pear, peach, grape, strawberry, raspberry, cherry, plum, pineapple, apricot and so forth. These flavoring agents may be used in liquid or solid form and may be used individually or in admixture. Commonly used flavors include mints such as peppermint, menthol, spearmint, artificial vanilla, cinnamon derivatives, and various fruit flavors, whether employed individually or in admixture.

### Delivery Systems

Some embodiments of the present invention provide delivery systems or delivery vehicles for the non-aldehyde cinnamon flavor compositions described above. The delivery systems (also referred to as "comestibles") generally encompass any edible or consumable compositions, such as foods and beverages. More particularly, the comestible may be selected from forms such as, but not limited to, hard candy, soft candy, cotton candy, pressed tablets, capsules, chewing gum, film, lozenges, liquid beverages, powdered beverages, and the like. Such comestibles include any of the non-aldehyde cinnamon flavor compositions described above, a carrier and optionally additives, such as flavor agents, coloring agents and the like. In a preferred embodiment, the comestible is a confectionery.

The term "confectioneries" as used herein includes, but is not limited to: chewing gum, nougats, candies, panned goods, gel confections, fondants, chewy candies, gummy candies, lozenges, hard boiled candies, mints, troches, pastilles, microcapsules, and fast-dissolving solid forms including freeze dried forms (cakes, wafers, thin films, and tablets) and fast dissolving solid forms including compressed tablets. The term "fast dissolving solid form" as used herein means that the solid dosage form dissolves in less than about 60 seconds, preferably less than about 15 seconds, more preferably less than about 5 seconds, in the oral cavity. Lozenges include discoid shaped solids comprising a therapeutic agent in a flavored base. The base may be a hard sugar candy, glycerinated gelatin, or a combination of sugar with sufficient mucilage to give it form. Compressed tablet forms typically include one or more fillers (compressible sugar), flavoring agents and lubricants. As used herein, the term "confectioneries" can also include fat-based confections such as chocolate, milk chocolate, dark chocolate, white chocolate, and combinations thereof.

As described in detail above, the non-aldehyde cinnamon flavor composition generally includes cinnamic aldehyde ethylene glycol acetal, and at least one non-aldehyde cinnamyl compound, wherein the flavor composition is free of added aldehyde. A high intensity sweetener may also be included. In general, the non-aldehyde cinnamon flavor composition can be present, for example, in an amount of at least about 0.01%, preferably at least about 0.1%, more preferably at least about 0.5% by weight of the comestible. In addition, the non-aldehyde cinnamon flavor may be present, for example, in an amount of at most about 15%, preferably at most about 10%, more preferably at most about 5% by weight of the comestible.

The carrier component may be selected from a variety of well-known carriers in the art. Selection of suitable carriers depends upon the type of comestible being prepared. The carrier may be present in amounts, for example, of about 5% to about 95% by weight of the comestible.

For example, some embodiments are directed to chewing gum compositions. As used herein, the terms "chewing gum" and "bubble gum" are used interchangeably and are both meant to include any gum compositions. The chewing gum may take any suitable form, for example, pellets or slabs.

The carrier in chewing gum compositions may include an elastomer, a gum base, and other optional components, such as bulk sweeteners, flavors and the like. The gum base may include any component known in the chewing gum art. Such components may be water soluble, water-insoluble or a combination thereof

The elastomers (rubbers) employed in the gum base will vary greatly depending upon various factors such as the type of gum base desired, the consistency of gum composition desired and the other components used in the composition to make the final chewing gum product. The elastomer may be any water-insoluble polymer known in the art, and includes those gum polymers utilized fox chewing gums and bubble gums. Illustrative examples of suitable polymers in gum bases include both natural and synthetic elastomers, For example, those polymers which are suitable in gum base compositions include, without limitation, natural substances (of vegetable origin) such as chicle, natural rubber, crown gum, nispero, rosidinha, jelutong, perillo, niger gutta, tunu, balata, guttapercha, lechi capsi, sorva, gutta kay, and the like, and mixtures thereof. Examples of synthetic elastomers include, without limitation, styrene-butadiene copolymers (SBR), polyisobutylene, iso butylene-isoprene copolymers, polyethylene, polyvinyl acetate and the like, and mixtures thereof.

The amount of elastomer employed in the gum base may vary depending upon various factors such as the type of gum base used, the consistency of the gum composition desired and the other components used in the composition to make the final chewing gum product. In general, the elastomer will be present in the gum base in an amount from about 10% to about 60% by weight, desirably from about 35% to about 40% by weight.

In some embodiments, the gum base may include wax. Wax can soften the polymeric elastomer mixture and improve the elasticity of the gum base. When present, the waxes employed will have a melting point below about 60°C, and preferably between about 45°C and about 55°C. The low melting wax may be a paraffin wax. The wax may be present in the gum base in an amount from about 6% to about 10%, and preferably from about 7% to about 9.5%, by weight of the gum base.

In addition to the low melting point waxes, waxes having a higher melting point may be used in the gum base in amounts up to about 5%, by weight of the gum base. Such high melting waxes include beeswax, vegetable wax, candelilla wax, carnuba wax, most petroleum waxes, and the like, and mixtures thereof.

The chewing gum compositions may also include amounts of conventional additives selected from the group consisting of sweetening agents, plasticizers, softeners, emulsifiers, fillers, bulking agents (carriers, extenders, bulk sweeteners), mineral adjuvants, flavor agents, antioxidants, acidulants, thickeners, and mixtures thereof. Some of these additives may serve more than one purpose. For example, in sugarless gum compositions, a bulk sweetener, such as maltitol or other sugar alcohol, may also function as a bulking agent.

The gum base may contain elastomer solvents to aid in softening the elastomer component. Such elastomer solvents may include those elastomer solvents known in the art, for example, terpinene resins such as polymers of alpha-pinene or beta-pinene, methyl, glycerol and pentaerythritol esters of rosins and modified rosins and gums such as hydrogenated, dimerized and polymerized rosins, and mixtures thereof. Examples of elastomer solvents suitable for use herein may include the pentaerythritol ester of partially hydrogenated wood and gum rosin, the pentaerythritol ester of wood and gum rosin, the glycerol ester of wood rosin, the glycerol ester of partially dimerized wood and gum rosin, the glycerol ester of polymerized wood and gum rosin, the glycerol ester of tall oil rosin, the glycerol ester of wood and gum rosin and the partially hydrogenated wood and gum rosin and the partially hydrogenated methyl ester of wood and rosin, and the like, and mixtures thereof. The elastomer solvent may be employed in the gum base in amounts, for example, from about 2% to about 15%, and preferably from about 7% to about 11%, by weight of the gum base.

The gum base may also include emulsifiers which aid in dispersing the immiscible components into a single stable system. The emulsifiers useful in this invention include glyceryl monostearate, lecithin, fatty acid monoglycerides, diglycerides, propylene glycol monostearate, and the like, and mixtures thereof. The emulsifier may be employed in amounts from about 2% to about 15%, and more specifically, from about 7% to about 11%, by weight of the gum base.

The gum base may also include plasticizers or softeners to provide a variety of desirable textures and consistency properties. Because of the low molecular weight of these ingredients, the plasticizers and softeners are able to penetrate the fundamental structure of the gum base making it plastic and less viscous. Useful plasticizers and softeners include lanolin, palmitic acid, oleic acid, stearic acid, sodium stearate, potassium stearate, glyceryl triacetate, glyceryl lecithin, glyceryl monostearate, propylene glycol monostearate, acetylated monoglyceride, glycerine, and the like, and mixtures thereof The plasticizers and softeners are generally employed in the gum base in amounts up to about 20% by weight of the gum base, and more specifically in amounts from about 9% to about 17%, by weight of the gum base.

Plasticizers also include hydrogenated vegetable oils, such as soybean oil and cottonseed oils, which may be employed alone or in combination. These plasticizers provide the gum base with good texture and soft chew characteristics. These plasticizers and softeners are generally employed in amounts from about 5% to about 14%, and more specifically in amounts from about 5% to about 13.5%, by weight of the gum base.

Anhydrous glycerin may also be employed as a softening agent, such as the commercially available United States Pharmacopeia (USP) grade, Glycerin is a syrupy liquid with a sweet warm taste and has a sweetness of about 60% of that of cane sugar. Because glycerin is hygroscopic, the anhydrous glycerin may be maintained under anhydrous conditions throughout the preparation of the chewing gum composition.

In some embodiments, the gum base of this invention, may also include effective amounts of bulking agents such as mineral adjuvants which may serve as fillers and textural agents. Useful mineral adjuvants include calcium carbonate, magnesium carbonate, alumina, aluminum hydroxide, aluminum silicate, talc, tricalcium phosphate, dicalcium phosphate, calcium sulfate and the like, and mixtures thereof. These fillers or adjuvants may be used in the gum base compositions in various amounts. Preferably the amount of filler, when used, will be present in an amount from about 15% to about 40%, and desirably from about 20% to about 30%, by weight of the gum base.

A variety of traditional ingredients may be optionally included in the gum base in effective amounts such as flavor agents, antioxidants, preservatives, and the like. For example, an anti-oxidant such as butylated hydroxytoluene (BHT), butylated hydroxyanisole (BHA), propyl gallate, vitamin E and mixtures thereof, may be included. Other conventional chewing gum additives known to one having ordinary skill in the chewing gum art may also be used in the gum base,

Examples of other conventional additives which may be used include thickeners, used alone or in combination with other softeners, such as methyl cellulose, alginates, carrageenan, xanthan gum, gelatin, carob, tragacanth, locust bean, and carboxy methyl cellulose, acidulants such as malic acid, adipic acid, citric acid, tartaric acid, fumaric acid, and mixtures thereof, and fillers, such as those discussed above under the category of mineral adjuvants.

Bulk sweeteners include sugars, sugarless bulk sweeteners, or the like, or mixtures thereof. Bulk sweeteners generally are present in amounts of about 5% to about 99% by weight of the chewing gum composition. Suitable sugar sweeteners generally include monosaccharides, di-saccharides and poly-saccharides such as but not limited to, sucrose (sugar), dextrose, maltose, dextrin, xylose, ribose, glucose, mannose, galactose, fructose (levulose), invert sugar, fructo oligo saccharide syrups, partially hydrolyzed starch, corn syrup solids and mixtures thereof.

Suitable sugarless bulk sweeteners include sugar alcohols (or polyols) such as, but not limited to, sorbitol, xylitol, mannitol, galactitol, maltitol, hydrogenated isomaltulose (ISOMALT), lactitol, erythrytol, hydrogenated starch hydrolysate, stevia and mixtures thereof.

Suitable hydrogenated starch hydrolysates include those disclosed in U.S. Pat. Nos. 25,959, 3,356,811, 4,279,931 and various hydrogenated glucose syrups and/or powders which contain sorbitol, hydrogenated disaccharides, hydrogenated higher polysaccharides, or mixtures thereof. Hydrogenated starch hydrolysates are primarily prepared by the controlled catalytic hydrogenation of corn syrups. The resulting hydrogenated starch hydrolysates are mixtures of monomeric, dimeric, and polymeric saccharides. The ratios of these different saccharides give different hydrogenated starch hydrolysates different properties. Mixtures of hydrogenated starch hydrolysates, such as LYCASIN, a commercially available product manufactured by Roquette Freres of France, and HYSTAR, a commercially available product manufactured by Lonza, Inc., of Fairlawn, N.J., are also useful.

Flavor agents, in addition to the non-aldehyde cinnamon flavor compositions, also may be included in the chewing gum compositions. Flavor agents which may be used include those flavors known to the skilled artisan, such as natural and artificial flavors, that are not aldehydes. These flavorings may be chosen from synthetic flavor oils and flavoring aromatics and/or oils, oleoresins and extracts derived from plants, leaves, flowers, fruits, and so forth, and combinations thereof. Nonlimiting representative flavor oils include spearmint oil, cinnamon oil, oil of wintergreen (methyl salicylate), peppermint oil, clove oil, bay oil, anise oil, eucalyptus oil, thyme oil, cedar leaf oil, oil of nutmeg, allspice, oil of sage, mace, oil of bitter almonds, and cassia oil. Also useful flavorings are artificial, natural and synthetic fruit flavors such as vanilla, and citrus oils including lemon, orange, lime, grapefruit, and fruit essences including apple, pear, peach, grape, strawberry, raspberry, cherry, plum, pineapple, apricot and so forth. These flavoring agents may be used in liquid or solid form and may be used individually or in admixture. Commonly used flavors include mints such as peppermint, menthol, spearmint, artificial vanilla, cinnamon derivatives, and various fruit flavors, whether employed individually or in admixture.

Other useful flavorings include esters such as cinnamyl acetate, citral diethylacetal, dihydrocarvyl acetate, eugenyl formate, and so forth may be used, Generally any flavoring or food additive such as those described in Chemicals Used in Food Processing, publication 1274, pages 63-258, by the National Academy of Sciences, that are not aldehydes may be used.

In some embodiments, the non-aldehyde cinnamon flavor composition and/or additional flavor agent may be employed in either liquid form and/or dried form. When employed in the latter form, suitable drying means such as spray drying may be used. Alternatively, the flavor agent may be absorbed onto water soluble materials, such as cellulose, starch, sugar, maltodextrin, gum arabic and so forth or may be encapsulated. The actual techniques for preparing such dried forms are well-known.

In some embodiments, the flavor agents may be used in many distinct physical forms well-known in the art to provide an initial burst of flavor and/or a prolonged sensation of flavor. Without being limited thereto, such physical forms include free forms, such as spray dried, powdered, beaded forms, encapsulated forms, and mixtures thereof.

In some embodiments, a material used to encapsulate an ingredient may include water insoluble polymers, co-polymers, or other materials capable of forming a strong matrix, solid coating, or film as a protective barrier with or for the ingredient. In some embodiments, the encapsulating material may completely surround, coat, cover, or enclose an ingredient. In other embodiments, the encapsulating material may only partially surround, coat, cover, or enclose an ingredient. Different encapsulating materials may provide different release rates or release profiles for the encapsulated ingredient. In some embodiments, encapsulating material used in a delivery system may include one or more of the following: polyvinyl acetate, polyethylene, crosslinked polyvinyl pyrrolidone, polymethylmethacrylate, polylactic acid, polyhydroxyalkanoates, ethylcellulose, polyvinyl acetatephthalate, polyethylene glycol esters, methacrylicacid-co-methylmethacrylate, ethylene-vinylacetate (EVA) copolymer, and the like, and combinations thereof.

There are many ways to encapsulate one or more ingredients with an encapsulating material. For example, in some embodiments, a sigma blade or Banbury^{™} type mixer may be used. In other embodiments, an extruder or other type of continuous mixer may be used. In some embodiments, spray coating, spray chilling, absorption, adsorption, inclusion complexing (e.g., creating a flavor/cyclodextrin complex), coacervation, fluidized bed coating, or other process may be used to encapsulate an ingredient with an encapsulating material. Examples of delivery systems that incorporate encapsulating materials and examples of methods of encapsulation can be found in PCT Patent Application WO-A-2006/127618 entitled "Delivery System For Managing Release of One or More Ingredients in a Compressible Gum System" filed 22 May 2006.

In some embodiments, the chewing gum or confection may have a coating thereon. Such coated chewing gums are typically referred to as pellet gums. The outer coating may be hard or crunchy, Any suitable coating materials known to those skilled in the art may be employed. Typically, the outer coating may include sorbitol, maltitol, xylitol, isomalt, and other crystallizable polyols; sucrose may also be used. Furthermore the coating may include several opaque layers, such that the chewing gum or confectionery composition is not visible through the coating itself, which can optionally be covered with a further one or more transparent layers for aesthetic, textural and protective purposes. The outer coating may also contain small amounts of water and gum arabic. The coating can be further coated with wax. The coating may be applied in a conventional manner by successive applications of a coating solution, with drying in between each coat As the coating dries it usually becomes opaque and is usually white, though other colorants may be added. A polyol coating can be further coated with wax. The coating can further include colored flakes or speckles. If the composition includes a coating, it is possible that one or more oral care actives can be dispersed throughout the coating. This is especially preferred if one or more oral care actives is incompatible in a single phase composition with another of the actives. Flavors may also be added to yield unique product characteristics.

In some embodiments, the coating also may include a non-aldehyde cinnamon flavor composition. The non-aldehyde cinnamon flavor composition may be selected from any of those described above. In accordance with the present invention, the non-aldehyde cinnamon flavor composition may be present in the gum core, the gum coating or both. The gum core may include a gum base, as described above, and also may include a non-aldehyde cinnamon flavor composition, which may be the same or different from the non-aldehyde cinnamon flavor composition used in the coating.

Other materials may be added to the coating to achieve desired properties. These materials may include without limitations, cellulosics such as carboxymethyl cellulose, gelatin, xanthan gum, gum arabic and polyvinyl alcohol (PVA).

The coating composition may also include a pre-coating which is added to the individual gum or confectionery pieces prior to an optional hard coating. The pre-coating may include an application of polyvinyl alcohol (PVA). This may be applied as a solution of PVA in a solvent, such as ethyl alcohol. When an outer hard coating is desired, the PVA application may be approximately 3% to 4% by weight of the total coating or about 1% of the total weight of the gum or confectionery piece (including a gum or confectionery core and hard coating).

The coating composition may be applied by any method known in the art including the method described above. The coating composition may be present in an amount from about 2% to about 60%, more specifically from about 25% to about 45% by weight of the total chewing gum or confectionery piece.

Some embodiments extend to methods of making the chewing gum or confectionery compositions. The compositions may be prepared using standard techniques and equipment known to those skilled in the art. The apparatus useful in accordance with the embodiments described herein includes mixing and heating apparatus well known in the chewing gum or confectionery manufacturing arts, and therefore the selection of the specific apparatus will be apparent to the artisan. For general chewing gum preparation processes see U.S. Patent Nos. 4,271,197 to Hopkins et al, 4,352,822 to Cherukuri et al and 4,497,832 to Cherukuri et al.

Some other embodiments are directed to comestibles in the form of a confectionery, for example, a lozenge or candy. The confectionery includes any of the non-aldehyde cinnamon flavor compositions described above. The carrier in confectionery compositions may also include bulk sweeteners such as sugars, sugarless bulk sweeteners, or the like, or mixtures thereof, as described above. Bulk sweeteners generally are present in amounts of about 0.05% to about 99% by weight of the confectionery composition. In some embodiments, the confectionery may include a coating as described above.

In a preferred embodiment, the confectionery includes a non-aldehyde cinnamon flavor composition in an amount of about 0.01% to about 15% by weight of the confectionery, preferably 0.1% to about 10% by weight of the confectionery.

A variety of traditional ingredients also may be included in the confectionery compositions in effective amounts such as flavor agents, coloring agents, sweeteners, antioxidants, preservatives, and the like, as described above.

Methods of making confectioneries are not discussed in detail herein as they are well known to one having ordinary skill in the art. For general confectionery preparation processes see U.S. Patent No. 5,698,181 to Luo.

Methods of preparing other comestible products, including soft candy, cotton candy, pressed tablets, capsules, film, liquid and powdered beverages, and the like also are well known to those having ordinary skill in the art and need not be discussed in detail herein.

For example, in some embodiments, the composition is adsorbed onto a solid carries. The solid carrier may be, for example, a fat, carbohydrate, non-carbohydrate fillers and combinations thereof.

In some embodiments, the non-aldehyde cinnamon flavor composition is incorporated into a capsule. Such capsules are well known in the art. For example, the capsule can be a gelatin-based capsule. Such gelatin-based capsules are commercially available.

In some embodiments, the delivery system, e.g, gum or a confectionery, may include a liquid fill, typically at or near the center. The term "center-fill" does not imply symmetry of a chewing gum or confectionery composition, only that the "center-fill" is within another region of the chewing gum or confectionery composition. In some embodiments, more than one filling may be present.

The center-fill, filling, or liquid-fill region may be partially or completely filled with liquid. The liquid-fill region may also include non-liquid components, such as flavor beads, fruit particles, nut particles, flavor particles, gelatin portions, etc. The liquid-fill portion may be aqueous or non-aqueous. Moreover, the liquid-fill portion may be a solution, a suspension, an emulsion, a semi-solid, a crème, or a gel. Moreover, the liquid-fill region may include two or more distinct liquids (which may or may not be miscible) in the same or different amounts having distinct or different characteristics (e.g., viscosity, color, flavor, ingredient components, functional ingredients, textures, odor, sweeteners, etc,). The liquid-fill region may include gasses, such as oxygen.

The filling, center-fill or liquid-fill composition may include any components known in the art for incorporation with a center-fill composition. This may include glycerine in addition to one or more other polyols in amounts greater than zero up to about 20%, more specifically, up to about 10% by weight of the total chewing gum or confectionery composition, i.e., including a center-fill composition, a gum or confectionery region and a coating. More desirably, the center-fill is approximately 8% by weight of the total chewing gum or confectionery composition. The other polyol component includes desirably maltitol, sorbitol, xylitol, or a combination thereof.

The liquid center may contain any of the non-aldehyde cinnamon flavor compositions described above. The liquid centers may also contain those traditional ingredients well known in the chewing gum and confectionery arts, such as flavoring agents, sweetening agents, and the like, and mixtures thereof, as described above. In addition to confectionery additives, the liquid centers may also contain pharmaceutical additives such as medicaments, breath fresheners, vitamins, minerals, caffeine, fruit juices, and the like, and mixtures thereof.

The center-fill composition also may include a natural or synthetic gum such as carboxymethylcellulose, pectin, propylene glycol aginate, agar and gum tragacanth. These compositions serve to increase viscosity by reducing the amount of free water in the composition. The viscosity of the center-fill may range from about 300 cp to about 6,000 cp at 25°C. In liquid-fill compositions which have a greater water activity than the surrounding gum region, the viscosity may range from about 3,000 cp to about 6,000 cp at 25°C.

Xanthan gum may also be used to increase the viscosity of the center-fill composition. Increasing viscosity of the liquid also helps prevent the liquid from leaking through the gum piece. Xanthan gum is available under the tradename Keltrol® from CP Kelpco of Atlanta, Georgia.

### Additional Ingredients

The flavoring and/or delivery system may include additional ingredients to provide various characteristics. Such additional ingredients include, for example, sensate ingredients, breath freshening ingredients, dental care ingredients, active ingredients, effervescing system ingredients, appetite suppressor ingredients, potentiator ingredients, food acid ingredients, micronutrient ingredients, mouth moistening ingredients, throat care ingredients, coloring ingredients, or a combination thereof.

### Sensate Ingredients

Sensate compounds can include cooling agents, warming agents, tingling agents, effervescent agents, and combinations thereof. A variety of well known cooling agents may be employed. For example, among the useful cooling agents are included xylitol, erythritol, dextrose, sorbitol, menthane, menthone, ketals, menthone ketals, menthone glycerol ketals, substituted p-menthanes, acyclic carboxamides, mono menthyl glutarate, substituted cyclohexanamides, substituted cyclohexane carboxamides, substituted ureas and sulfonamides, substituted menthanols, hydroxymethyl and hydroxymethyl derivatives of p-menthane, 2-mercapto-cyclo-decanone, hydroxycarboxylic acids with 2-6 carbon atoms, cyclohexanamides, menthyl acetate, menthyl salicylate, N,2,3-trimethyl-2-isopropyl butanamide (WS-23), N-ethyl-p-menthane-3-caxboxamide (WS-3), isopulegol, 3-(1-menthoxy)propane-1,2-diol, 3-(1-menthoxy)-2-methylpropane-1,2-diol, p-menthane-2,3-diol, p-menthane-3,8-diol, 6-isopropyl-9-methyl-1,4-dioxaspiro[4,5]decane-2-methanol, menthyl succinate and its alkaline earth metal salts, trimethylcyclohexanol, N-ethyl-2-isapropyl-5-methylcyclohexanecarboxamide, Japanese mint oil, peppermint oil, 3-(1-menthoxy)ethan-1-ol, 3-(1-menthoxy)propan-1-ol, 3-(1-menthoxy)butan-1-ol, 1-menthylacetic acid N-ethylamide, 1-menthyl-4-hydroxypentanoate, 1-menthyl-3-hydroxybutyrate, N,2,3-trimethyl-2-(1-methylethyl)-butanamide, n-ethyl-t-2-c-6 nonadienamide, N,N-dimethyl menthyl succinamide, substituted p-menthanes, substituted p-menthane-carboxamides, 2-isoporopanyl-5-methylcyclohexanol (from Hisamitsu Pharmaceuticals, hereinafter "isopregol"); menthone glycerol ketals (FEMA 3807, tradename FRESCOLAT® type MGA); 3-1-menthoxypropane-1,2-diol (from Takasago, FEMA 3784); and menthyl lactate; (from Haarman & Reimer, FEMA 3748, tradename FRESCOLAT® type ML), WS-30, WS-14, Eucalyptus extract (p-Mehtha-3,8-Diol), Menthol (its natural or synthetic derivatives), Menthol PG carbonate, Menthol EG carbonate, Menthol glyceryl ether, N-tertbutyl-p-menthane-3-carboxamide, P-menthane-3-carboxylic acid glycerol ester, Methyl-2-isopryl-bicyclo (2,2,1),Heptane-2-carboxamide; and Menthol methyl ether, and menthyl pyrrolidone carboxylate among others. These and other suitable cooling agents are further described in the following U.S. patents: U.S. 4,230,688; 4,032,661; 4,459,425; 4,178,459; 4,296,255; 4,136,163; 5,009,893; 5,266,592; 5,698,181; 6,277,385; 6,627,233; 7,030,273. Still other suitable cooling agents are further described in the following U.S. Patent Applications: U.S. 2005/0222256; 2005/0265930.

In some embodiments, warming components may be selected from a wide variety of compounds known to provide the sensory signal of warming to the user. These compounds offer the perceived sensation of warmth, particularly in the oral cavity, and of ten enhance the perception of flavors, sweeteners and other organoleptic components. In some embodiments, useful warming compounds can include vanillyl alcohol n-butylether (TK-1000) supplied by Takasago Perfumary Company Limited, Tokyo, Japan, vanillyl alcohol n-propylether, vanillyl alcohol isopropylether, vanillyl alcohol isobutylether, vanillyl alcohol n-aminoether, vanillyl alcohol isoamyleather, vanillyl alcohol n-hexyleather, vanillyl alcohol methylether, vanillyl alcohol ethylether, gingerol, shogaol, paradol, zingerone, capsaicin, dihydrocapsaicin nordihydrocapsaicin, homocapsaicin, homodihydrocapsaicin, ethanol, isopropyl alcohol, iso-amylalcohol, benzyl alcohol, glycerine, and combinations thereof.

In some embodiments, a tingling sensation can be provided, One such tingling sensation is provided by adding jambu, oleoresin, or spilanthol to some examples. In some embodiments, alkylamides extracted from materials such as jambu or sanshool can be included. Additionally, in some embodiments, a sensation is created due to effervescence. Such effervescence is created by combining an alkaline material with an acidic material. In some embodiments, an alkaline material can include alkali metal carbonates, alkali metal bicarbonates, alkaline earth metal carbonates, alkaline earth metal bicarbonates and mixtures thereof. In some embodiments, an acidic material can include acetic acid, adipic acid, ascorbic acid, butyric acid, citric acid, formic acid, fumaric acid, glyconic acid, lactic acid, phosphoric acid, malic acid, oxalic acid, succinic acid, tartaric acid, aspartic acid, benzoic acid, caffeotannic acid, iso-citric acid, citramalic acid, galacturonic acid, glucuronic acid, glyceric acid, glycolic acid, ketoglutaric acid, a-ketoglutaric acid, lactoisocitric acid, oxalacetic acid, pyruvic acid, quinic acid, shikimic acid, succinic acid, tannic acid, hydroxyacetic acid, suberic acid, sebacic acid, azelaic acid, pimelic acid, capric cid, and combinations thereof. Examples of "tingling" type sensates can be found in U.S. Patent No. 6,780,443.

Sensate components may also be referred to as "trigeminal stimulants" such as those disclosed in U.S. Patent Application No. 2005/0202118. Trigeminal stimulants are defined as an orally consumed product or agent that stimulates the trigeminal nerve. Examples of cooling agents which are trigeminal stimulants include menthol, WS-3, N-substituted p-menthane carboxamide, acyclic carboxamides including WS-23, WS-5, WS-14, methyl succinate, and menthone glycerol ketals. Trigeminal stimulants can also include flavors, tingling agents, Jambu extract, vanillyl alkyl ethers, such as vanillyl n-butyl ether, spilanthol, Echinacea extract, Northern Prickly Ash extract, capsaicin, capsicum oleoresin, red pepper oleoresin, black pepper oleoresin, piperine, ginger oleoresin, gingerol, shoagol, cinnamon oleoresin, cassia oleoresin, eugenol, cyclic acetal of vanillin and menthol glycerin ether, unsaturated amides, and combinations thereof. Other cooling compounds can include derivatives of 2,3-dimethyl-2-isopropylbutyric acid such as those disclosed in U.S. 7,030,273.

In addition to trigeminal nerve stimulants and cooling compounds, a cooling sensation can be provided by materials exhibiting a negative heat of solution including, but not limited to, polyols such as xylitol, erythritol, dextrose, and sorbitol, and combinations thereof

In some embodiments, sensate components are used at levels that provide a perceptible sensory experience i.e. at or above their threshold levels. In other embodiments, sensate components are used at levels below their threshold levels such that they do not provide an independent perceptible sensory experience. At sub-threshold levels, the sensates may provide an ancillary benefit such as flavor or sweetness enhancement or potentiation.

### Breath Freshening Ingredients

Breath fresheners can include essential oils as well as various alcohols, and similar materials. In some embodiments, essential oils can include oils of spearmint, peppermint, wintergreen, sassafras, chlorophyll citral, geraniol, cardamom, clove, sage, carvacrol, eucalyptus, cardamom, magnolia bark extract, marjoram, cinnamon, lemon, lime, grapefruit, and orange. In some embodiments, chemicals such as menthol, carvone, iso-garrigol, and anethole can function as breath fresheners. Of these, the most commonly employed are oils of peppermint, spearmint and chlorophyll.

In addition to essential oils and chemicals derived from them, in some embodiments breath fresheners can include but are not limited to zinc citrate, zinc acetate, zinc fluoride, zinc ammonium sulfate, zinc bromide, zinc iodide, zinc chloride, zinc nitrate, zinc flurosilicate, zinc gluconate, zinc tartarate, zinc succinate, zinc formate, zinc chromate, zinc phenol sulfonate, zinc dithionate, zinc sulfate, silver nitrate, zinc salicylate, zinc glycerophosphate, copper nitrate, chlorophyll, copper chlorophyll, chlorophyllin, hydrogenated cottonseed oil, chlorine dioxide, beta cyclodextrin, zeolite, silica-based materials, carbon-based materials, enzymes such as laccase, and combinations thereof.

In some embodiments, the release profiles of probiotics can be managed for a confectionery including, but not limited to lactic acid producing microorganisms such as *Bacillus coagulans, Bacillus subtilis, Bacillus laterosporus, Bacillus laevolacticus, Sporolactobacillus inulinus, Lactobacillus acidophilus, Lactobacillus curvatus, Lactobacillus plantarum, Lactobacillus jenseni, Lactobacillus casei, Lactobacillus fermentum Lactococcus lactis, Pedioccocus acidilacti, Pedioccocus pentosaceus, Pedioccocus urinae, Leuconostoc mesenteroides, Bacillus coagulans, Bacillus subtilis, Bacillus laterosporus. Bacillus laevolacticus, Sporolactobacillus inulinus* and mixtures thereof. Breath fresheners are also known by the following trade names: Retsyn,^{™} Actizol,^{™} and Nutrazin,^{™} Examples of malodor-controlling compositions are also included inU.S. Patent No. 5,300,305 to Stapler et al. and in U.S. Patent Application Publication Nos. 2003/0215417 and 2004/0081713 .

### Dental Care Ingredients

Dental care ingredients (also known as oral care ingredients) may include but are not limited to tooth whiteners, stain removers, oral cleaning, bleaching agents, desensitizing agents, dental remineralization agents, antibacterial agents, anticaries agents, plaque acid buffering agents, surfactants and anticalculus agents. Non-limiting examples of such ingredients can include, hydrolytic, agents including proteolytic enzymes, abrasives such as hydrated silica, calcium carbonate, sodium bicarbonate and alumina, other active stain-removing components such as surface-active agents, including, but not limited to anionic surfactants such as sodium stearate, sodium palminate, sulfated butyl oleate, sodium oleate, salts of fumaric acid, glycerol, hydroxylated lecithin, sodium lauryl sulfate and chelators such as polyphosphates, which are typically employed as tartar control ingredients. In some embodiments, dental care ingredients can also include tetrasodium pyrophosphate and sodium tri-polyphosphate, sodium bicarbonate, sodium acid pyrophosphate, sodium tripolyphosphate, xylitol, sodium hexametaphosphate.

In some embodiments, peroxides such as carbamide peroxide, calcium peroxide, magnesium peroxide, sodium peroxide, hydrogen peroxide, and peroxydiphospate are included. In some embodiments, potassium nitrate and potassium citrate are included. Other examples can include casein glycomacropeptide, calcium casein peptone-calcium phosphate, casein phosphopeptides, casein phosphopeptade-amorphous calcium phosphate (CPP-ACP), and amorphous calcium phosphate. Still other examples can include papaine, krillase, pepsin, trypsin, lysozyme, dextranase, mutanase, glycoamylase, amylase, glucose oxidase, and combinations thereof.

Further examples can include surfactants such as sodium stearate, sodium ricinoleate, and sodium lauryl sulfate surfactants for use in some embodiments to achieve increased prophylactic action and to render the dental care ingredients more cosmetically acceptable. Surfactants can preferably be detersive materials which impart to the composition detersive and foaming properties. Suitable examples of surfactants are water-soluble salts of higher fatty acid monoglyceride monosulfates, such as the sodium salt of the monosulfated monoglyceride of hydgrogenated coconut oil fatty acids, higher alkyl sulfates such as sodium lauryl sulfate, alkyl aryl sulfonates such as sodium dodecyl benzene sulfonate, higher alkyl sulfoacetates, sodium lauryl sulfoacetate, higher fatty acid esters of 1,2-dihydroxy propane sulfonate, and the substantially saturated higher aliphatic acyl amides of lower aliphatic amino carboxylic acid compounds, such as those having 12 to 16 carbons in the fatty acid, alkyl or acyl radicals, and the like. Examples of the last mentioned amides are N-lauroyl sarcosine, and the sodium, potassium, and ethanolamine salts of N-lauxoyl, N-myristoyl, or N-palmitoyl sarcosine.

In addition to surfactants, dental care ingredients can include antibacterial agents such as, but not limited to, triclosan, chlorhexidine, zinc citrate, silver nitrate, copper, limonene, and cetyl pyridinium chloride. In some embodiments, additional anti-caries agents can include fluoride ions or fluorine-providing components such as inorganic fluoride salts. In some embodiments, soluble alkali metal salts, for example, sodium fluoride, potassium fluoride, sodium fluorosilicate, ammonium fluorosilicate, sodium monofluorophosphate, as well as tin fluorides, such as stannous fluoride and stannous chloride can be included. In some embodiments, a fluorine-containing compound having a beneficial effect on the care and hygiene of the oral cavity, e.g., diminution of enamel solubility in acid and protection of the teeth against decay may also be included as an ingredient. Examples thereof include sodium fluoride, stannous fluoride, potassium fluoride, potassium stannous fluoride, sodium hexafluorostannate, stannous chlorofluoride, sodium fluorozirconate, and sodium monofluorophosphate. In some embodiments, urea is included.

Further examples are included in the following U.S. patents and U,S. published patent applications: U.S. Patent Nos. 5,227,154 to Reynolds, 5,378,131 to Greenberg, 6,846,500 to Luo et aL, 6,733,818 to Luo et al., 6,696,044 to Luo et al., 6,685,916 to Holme et al., 6,485,739 to Luo et al., 6,479,071 to Holme et al., 6,471,945 to Luo et al., U.S. Patent Publication Nos. 20050025721 to Holme et al., 2005008732 to Gebreselassie et al., and 20040136928 to Holme et al.

### Active Ingredients

Actives generally refer to those ingredients that are included in a delivery system and/or confectionery composition for the desired end benefit they provide to the user. In some embodiments, actives can include medicaments, nutrients, micronutrients, nutraceuticals, herbals, nutritional supplements, pharmaceuticals, drugs, and the like and combinations thereof.

### Potentiator Ingredients

Potentiators can consist of materials that may intensify, supplement, modify or enhance the taste and/or aroma perception of an original material without introducing a characteristic taste and/or aroma perception of their own. In some embodiments, potentiators designed to intensify, supplement, modify, or enhance the perception of flavor, sweetness, tartness, umami, kokumi, saltiness and combinations thereof can be included.

In some embodiments, examples of suitable potentiators, also known as taste potentiators include, but are not limited to, neohesperidin dihydrochalcone, chlorogenic acid, alapyridaine, cynarin, miraculin, glupyridaine, pyridinium-betain compounds, glutamates, such as monosodium glutamate and monopotassium glutamate, neotame, thaumatin, tagatose, trebalose, salts, such as sodium chloride, monoammonium glycyrrhizinate, vanilla extract (in ethyl alcohol), sugar acids, potassium chloride, sodium acid sulfate, hydrolyzed vegetable proteins, hydrolyzed animal proteins, yeast extracts, adenosine monophosphate (AMP), glutathione, nucleotides, such as inosine monophosphate, disodium inosinate, xanthosine monophosphate, guanylate monophosphate, alapyridaine (N-(1-carboxyethyl)-6-(hydroxymethyl)pyridinium-3-ol inner salt, compositions comprising 5'-nucleotides such as those disclosed in US 2006/0078972 to Noordam et al, which is incorporated in its entirety herein by reference, sugar beet extract (alcoholic extract), sugarcane leaf essence (alcoholic extract), curculin, strogin, mabinlin, gymnemic acid, hydroxybenzoic acids, 3-hydrobenzoic acid, 2,4-dihydrobenzoic acid, citrus aurantium, vanilla oleoresin, sugarcane leaf essence, maltol, ethyl maltol, vanillin, licorice glycyrrhizinates, compounds that respond to G-protein coupled receptors (T2Rs and T1Rs) and taste potentiator compositions that impart kokumi, as disclosed in U.S. Patent No. 5,679,397 to Kuroda et al."Kokumi" refers to materials that impart "mouthfulness" and "good body".

Sweetener potentiators, which are a type of taste potentiator, enhance the taste of sweetness. In some embodiments, exemplary sweetener potentiators include, but are not limited to, monoammonium glycyrrhizinate, licorice glycyrrhizinates, citrus aurantium, alapyridaine, alapyridaine (N-(1-carboxyethyl)-6-(hydroxymethyl)pyridinium-3-ol) inner salt, miraculin, curculin, strogin, mabinlin, gymnemic acid, cynarin, glupyridaine, pyridinium-betain compounds, sugar beet extract, neotame, thaumatin, neohesperidin dihydrochalcone, hydroxybenzoic acids, tagatose, trehalose, maltol, ethyl maltol, vanilla extract, vanilla oleoresin, vanillin, sugar beet extract (alcoholic extract), sugarcane leaf essence (alcoholic extract), compounds that respond to G-protein coupled receptors (T2Rs and TIRs) and combinations thereof.

Additional examples of potentiators for the enhancement of salt taste include acidic peptides, such as those disclosed in U.S. Patent No. 6,974,597. Acidic peptides include peptides having a larger number of acidic amino acids, such as aspartic acid and glutamic acid, than basic amino acids, such as lysine, arginine and bistidine. The acidic peptides are obtained by peptide synthesis or by subjecting proteins to hydrolysis using endopeptidase, and if necessary, to deamidation. Suitable proteins for use in the production of the acidic peptides or the peptides obtained by subjecting a protein to hydrolysis and deamidation include plant proteins, (e.g. wheat gluten, corn protein (e.g., zein and gluten meal), soybean protein isolate), animal proteins (e.g., milk proteins such as milk casein and milk whey protein, muscle proteins such as meat protein and fish meat protein, egg white protein and collagen), and microbial proteins (e.g., microbial cell protein and polypeptides produced by microorganisms).

The sensation of warming or cooling effects may also be prolonged with the use of a hydrophobic sweetener as described in U.S. Patent Application Publication 200310072842 A1 .For example, such hydrophobic sweeteners include those of the formulae I-XI as set forth below:

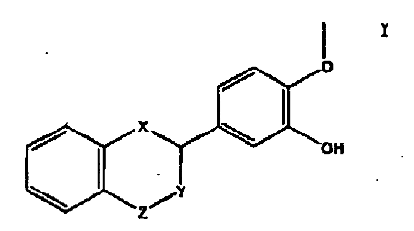

wherein X, Y and Z are selected from the group consisting of CH₂, O and S;

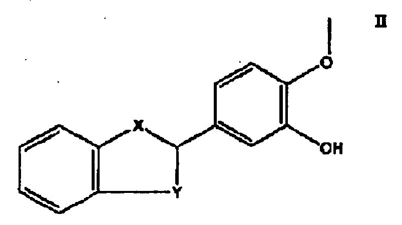

wherein X and Y are selected from the group consisting of S and O;

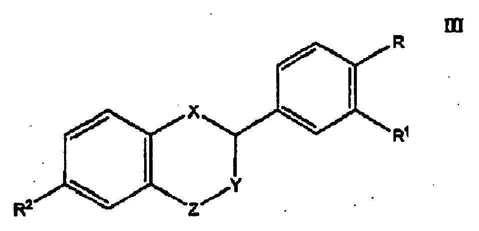

wherein X is S or O; Y is O or CH₂; Z is CH₂, SO₂ or S; R is OCH₃, OH or H; R¹ is SH or OH and R² is H or OH;

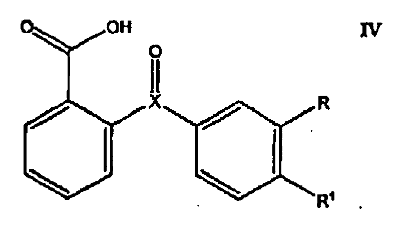

wherein X is C or S; R is OH or H and R¹ is OCH₃ or OH;

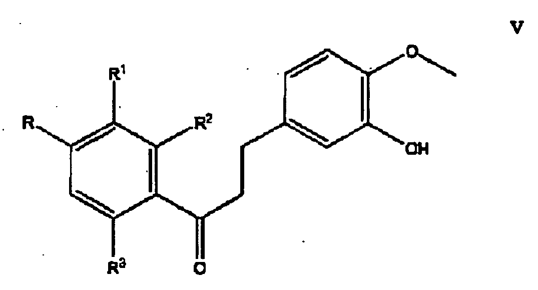

wherein R, R² and R³ are OH or H and R¹ is H or COOH;

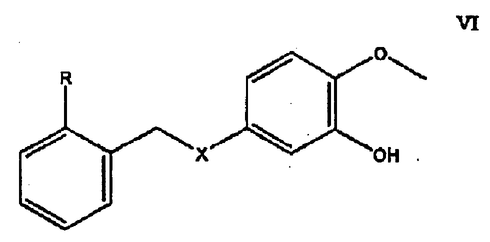

wherein X is O or CH₂ and R is COOH or H;

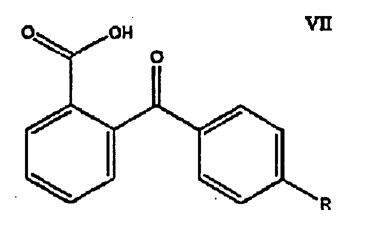

wherein R is CH₃CH₂, OH, N (CH3)₂ or Cl; 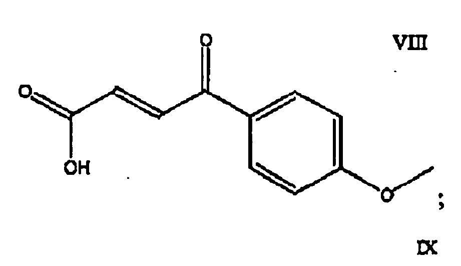 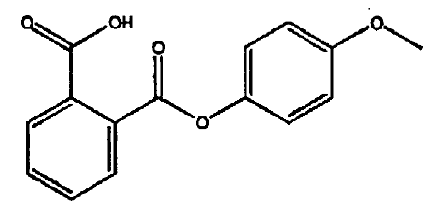 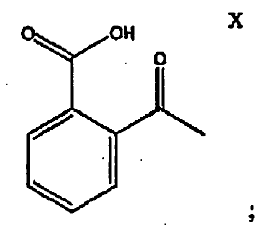 and

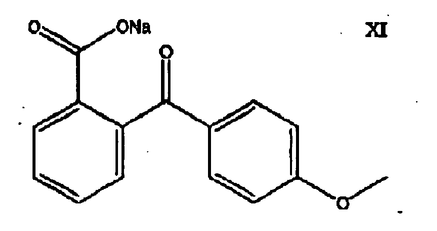

Perillartine may also be added as described in U.S. Patent No. 6,159,509 also incorporated in its entirety herein by reference.

### Food Acid Ingredients

Acids can include, but are not limited to acetic acid, adipic acid, ascorbic acid, butyric acid, citric acid, formic acid, fumaric acid, glyconic acid, lactic acid, phosphoric acid, malic acid, oxalic acid, succinic acid, tartaric acid, aspartic acid, benzoic acid, caffeotannic acid, iso-citric acid, citramalic acid, galacturonic acid, glucuronic acid, glyceric acid, glycolic acid, ketoglutaric acid, a-ketoglutaric acid, lactoisocitric acid, oxalacetic acid, pyruvic acid, quinic acid, shikimic acid, succinic acid, tannic acid, hydroxyacetic acid, suberic acid, sebacic acid, azelaic acid, pimelic acid, capric cid, and combinations thereof.

### Mouth Moistening Ingredients

Mouth moisteners can include, but are not limited to, saliva stimulators such as acids and salts and combinations thereof. In some embodiments, acids can include acetic acid, adipic acid, ascorbic acid, butyric acid, citric acid, formic acid, fumaric acid, glyconic acid, lactic acid, phosphoric acid, malic acid, oxalic acid, succinic acid, tartaric acid and combinations thereof.

Mouth moisteners can also include hydrocolloid materials that hydrate and may adhere to oral surface to provide a sensation of mouth moistening. Hydrocolloid materials can include naturally occurring materials such as plant exudates, seed gums, and seaweed extracts or they can be chemically modified materials such as cellulose, starch, or natural gum derivatives. In some embodiments, hydrocolloid materials can include pectin, gum arabic, acacia gum, alginates, agar, carageenans, guar gum, xanthan gum, locust bean gum, gelatin, gellan gum, galactomannans, tragacanth gum, karaya gum, curdlan, konjac, chitosan, xyloglucan, beta glucan, furcellaran, gum ghatti, tamarin, bacterial gums, and combinations thereof. Additionally, in some embodiments, modified natural gums such as propylene glycol alginate, carboxymethyl locust bean gum, low methoxyl pectin, and their combinations can be included. In some embodiments, modified celluloses can be included such as microcrystalline cellulose, carboxymethlcellulose (CMC), methylcellulose (MC), hydroxyptopylmethylcellulose (HPCM), and hydroxypropylcellulose (MPC), and combinations thereof.

Similarly, humectants which can provide a perception of mouth hydration can be included. Such humectants can include, but are not limited to glycerol, sorbitol, polyethylene glycol, erythritol, and xylitol. Additionally, in some embodiments, fats can provide a perception of mouth moistening. Such fats can include medium chain triglycerides, vegetable oils, fish oils, mineral oils, and combinations thereof.

### Throat Care Ingredients

Throat soothing ingredients can include analgesics, anesthetics, demulcents, antiseptic, and combinations thereof In some embodiments, analgesics/anesthetics can include menthol, phenol, hexylresorcinol, benzocaine, dyclonine hydrochloride, benzyl alcohol, salicyl alcohol, and combinations thereof. In some embodiments, demulcents can include but are not limited to slippery elm bark, pectin, gelatin, and combinations thereof. In some embodiments, antiseptic ingredients can include cetylpyridinium chloride, domiphen bromide, dequalinium chloride, and combinations thereof

In some embodiments, antitussive ingredients such as chlophedianol hydrochloride, codeine, codeine phosphate, codeine sulfate, dextromethorphan, dextromethorphan hydrobromide, diphenhydramine citrate, and diphenhydramine hydrochloride, and combinations thereof can be included.

In some embodiments, throat soothing agents such as honey, propolis, aloe vera, glycerine, menthol and combinations thereof can be included In still other embodiments, cough suppressants can be included. Such cough suppressants can fall into two groups: those that alter the consistency or production of phlegm such as mucolytics and expectorants; and those that suppress the coughing reflex such as codeine (narcotic cough suppressants), antihistamines, dextromethorphan and isoproterenol (non-narcotic cough suppressants). In some embodiments, ingredients from either or both groups can be included.

In still other embodiments, antitussives can include, but are not limited to, the group consisting of codeine, dextromethorphan, dextrorphan, diphenhydramine, hydrocodone, noscapine, oxycodone, pentoxyverine and combinations thereof. In some embodiments, antihistamines can include, but are not limited to, acrivastine, azatadine, brompheniramine, chlorpheniramine, clemastine, cyproheptadine, dexbrompheniramine, dimenhydrinate, diphenhydramine, doxylamine, hydroxyzine, meclizine, phenindamine, phenyltoloxamine, promethazine, pyrilamine, tripelennamine, triprolidine and combinations thereof. In some embodiments, non-sedating antihistamines can include, but are not limited to, astemizole, cetirizine, ebastine, fexofenadine, loratidine, terfenadine, and combinations thereof.

In some embodiments, expectorants can include, but are not limited to, ammonium chloride, guaifenesin, ipecac fluid extract potassium iodide and combinations thereof. In some embodiments, mucolytics can include, but are not limited to, acetylcycsteine, ambroxol, bromhexine and combinations thereof. In some embodiments, analgesic, antipyretic and antiinflammatory agents can include, but are not limited to, acetaminophen, aspirin, diclofenac, diflunisal, etodolac, fenoprofen, flurbiprofen, ibuprofen, ketoprofen, ketorolac, nabumetone, naproxen, piroxicam, caffeine and mixtures thereof. In some embodiments, local anesthetics can include, but are not limited to, lidocaine, benzocaine, phenol, dyclonine, benzonotate and mixtures thereof.

In some embodiments nasal decongestants and ingredients that provide the perception of nasal clearing can be included. In some embodiments, nasal decongestants can include but are not limited to phenylpropanolamine, pseudoephedrine, ephedrine, phenylephrine, oxymetazoline, and combinations thereof In some embodiments ingredients that provide a perception of nasal clearing can include but are not limited to menthol, camphor, borneol, ephedrine, eucalyptus oil, peppermint oil, methyl salicylate, bornyl acetate, lavender oil, wasabi extracts, horseradish extracts, and combinations thereof. In some embodiments, a perception of nasal clearing can be provided by odoriferous essential oils, extracts from woods, confectioneries, flowers and other botanicals, resins, animal secretions, and synthetic aromatic materials.

### Coloring Ingredients

In some embodiments, one or more colors can be included. As classified by the United States Food, Drug, and Cosmetic Act (21 C.F.R. 73), colors can include exempt from certification colors (sometimes referred to as natural even though they can be synthetically manufactured) and certified colors (sometimes referred to as artificial), or combinations thereof. In some embodiments, exempt from certification or natural colors can include, but are not limited to annatto extract, (E160b), bixin, norbixin, astaxanthin, dehydrated beets (beet powder), beetroot red/betanin (E162), ultramarine blue, canthaxanthin (E161g), cryptoxanthin (E161c), rubixanthin (E161d), violanxanthin (E161e), rhodoxanthin (E161f), caramel (E150(a-d)), β-apo-8'-carotenal (E160e), β-carotene (E160a), alpha carotene, gamma carotene, ethyl ester of beta-apo-8 carotenal (E160f), flavoxanthin (E161a), lutein (E161b), cochineal extract (E120); carmine (E132), cartnoisine/azorubine (E122), sodium copper chlorophyllin (E141), chlorophyll (E 140), toasted partially defatted cooked cottonseed flour, ferrous gluconate, ferrous lactate, grape color extract, grape skin extract (enocianina), anthocyanins (E163), haematococcus algae meal, synthetic iron oxide, iron oxides and hydroxides (E172), fruit juice, vegetable juice, dried algae meal, tagetes (Aztec marigold) meal and extract, carrot oil, corn endosperm oil, paprika, paprika oleoresin, phaffia yeast, riboflavin (E101), saffron, titanium dioxide, turmeric (E100), turmeric oleoresin, amaranth (E123), capsanthin/capsorbin (E160c), lycopene (E160d), and combinations thereof.

In some embodiments, certified colors can include, but are not limited to, FD&C blue #1, FD&C blue #2, FD&C green #3, FD&C red #3, FD&C red #40, FD&C yellow #5 and FD&C yellow #6, tartrazine (E102), quinoline yellow (E104), sunset yellow (E1 10), ponceau (E124), erythrosine (E127), patent blue V (E131), titanium dioxide (E171), aluminium (E173), silver (E174), gold (E175), pigment rubine/lithol rubine BK (E180), calcium carbonate (E170), carbon black (E153), black PN/brilliant black BN (E151), green S/acid brilliant green BS (E142), and combinations thereof. In some embodiments, certified colors can include FD&C aluminum lakes, These consist of the aluminum salts of FD&C dyes extended on an insoluble substrate of alumina hydrate. Additionally, in some embodiments, certified colors can be included as calcium salts.

The features and advantages of the present invention are more fully shown by the following examples which are provided for purposes of illustration, and are not to be construed as limiting the invention in any way,

### EXAMPLES

### Example 1

The following examples A-E listed in Table 1 are directed to non-aldehyde cinnamon flavor compositions. The ingredients of the compositions and amounts are listed according to weight percent of the flavor composition.

**Table 1: Non-aldehyde cinnamon flavor compositions**

| | **% w/w** | | | | |
|---|---|---|---|---|---|
| **Ingredient** | **A** | **B** | **C** | **D** | **E** |
| Cinnamyl Alcohol | 10-20 | | | 10-20 | 5-15 |
| Amylcinnamyl alcohol | | 10-20 | | | |
| 3-phenyl-1-propanol | | | 10-20 | | 5-15 |
| Cinnamyl Propionate | | 10-50 | | 10-20 | |
| Cinnamyl aldehyde ethylene glycol acetal | 40-60 | 40-60 | 40-60 | 40-60 | 40-60 |
| Cinnamyl butyrate | 10-50 | | | 1-10 | 5-15 |
| Cinnamic acid | 10-25 | | 10-25 | 10-25 | |
| 3-phenyl propionic acid | | 10-25 | | | 5-15 |
| Cinnamyl acetate | | | 2-15 | 2-15 | |
| Sucralose | 0.01-10 | | | | |
| Aspartame | | 0.01-10 | | | 0.005-5 |
| Monatin | | | 0.01-10 | | |
| Cyclamate | | | | 0.01-10 | |
| Acesulfame K | | | | | 0.005-5 |

### Example 2

The following examples A-H as set forth in Tables 2-4 are directed to confectioneries. - The "Flavor" ingredient is a non-aldehyde cinnamon flavor composition as described above.

**Table 2: Center Fill Composition**

| **Ingredient** | **%w/w of Center-Fill Composition** | | | | | | | |
|---|---|---|---|---|---|---|---|---|
| | **A** | **B** | **C** | **D** | **E** | **F** | **G** | **H** |
| Sugar | 10-30 | | 10-30 | | 10-30 | 10-30 | | |
| Glucose | 20-60 | | 20-60 | | 20-60 | 20-60 | | |
| Vegetable Fat | 0-5 | 0-5 | 0-5 | 0-5 | 0-5 | 0-5 | 0-5 | 0-5 |
| Emulsifier | 0-0.5 | 0-0.5 | 0-0.5 | 0-0.5 | 0-0.5 | 0-0.5 | 0-0.5 | 0-0.5 |
| Hydrogenated Starch Hydrolysate | | 20-30 | | 20-30 | 5-15 | 20-30 | 5-15 | 20-30 |
| Sorbitol Powder | 35-65 | | | 10-50 | | 10-50 | | |
| Xylitol Powder | | 35-65 | | 10-50 | 10-50 | | | 35-65 |
| Erythritol Powder | | | 35-65 | | 10-50 | 10-50 | 35-65 | |
| Pectin | 0.1-1.0 | 0.1-1.0 | 0.1-1.0 | 0.1-1.0 | 0.1-1.0 | 0.1-1.0 | 0.1-1.0 | 0.1-1.0 |
| Flavor | 0.5-3.0 | 0.5-3.0 | 0.5-3.0 | 0.5-3,0 | 0.5-3.0 | 0.5-3.0 | 0.5-3.0 | 0.5-3.0 |
| Salt | 0-0,2 | 0-0.2 | 0-0.2 | 0-0,2 | 0-0.2 | 0-0.2 | 0-0.2 | 0-0.2 |
| Food Acid | 0-3.0 | 0-3.0 | 0-3.0 | 0-3.0 | 0-3.0 | 0-3.0 | 0-3.0 | 0-3.0 |
| WS3 | 0.01-0.50 | | | 0.01-0.50 | | 0.01-0.50 | | |
| WS23 | | 0.01-0.50 | | 0.01-0.50 | 0.01-0.50 | | | 0.01-0.50 |
| Menthyl glutarate | | | 0.01-0.50 | | 0.01-0.50 | 0.01-0.50 | | 0.01-0.50 |
| Menthol | 0.01-0.50 | | | 0.01-0.50 | 0.01-0.50 | | | 0.01-0.50 |
| Color | 0.01-0.50 | 0.01-0.50 | 0.01-0.50 | 0.01-0.50 | 0.01-0.50 | 0.01-0.50 | 0.01-0.50 | 0.01-0.50 |
| Acesulfame K | 0.005-1.5 | 0.005-1.5 | | 0.005-1.5 | | | 0.005-1.5 | |
| Aspartame | | | 0.005-1.5 | 0.005-1.5 | | | 0.005-1.5 | 0.005-1.5 |
| Sucralose | | 0.005-1.5 | | 0.005-1.5 | 0.005-1.5 | | | 0.005-1.5 |

**Table 3: Confectionery Region Composition**

| **Ingredient** | **%w/w of Confectionery Region Composition** | | | | | | | |
|---|---|---|---|---|---|---|---|---|
| | **A** | **B** | **C** | **D** | **E** | **F** | **G** | **H** |
| Sugar | 20-60 | 20-60 | | | 20-60 | | 20-60 | 20-60 |
| Glucose | 20-60 | 20-60 | | | 20-60 | | 20-60 | 20-60 |
| Powdered Fondant | | 3-10 | | | 3-10 | | 3-10 | |
| Sorbitol | | | 10-90 | 10-90 | | 10-90 | | |
| Erythritol | | | 10-90 | 10-90 | | 10-90 | | |
| Hydrogenated Starch Hydrolysate | | | 10-90 | 10-90 | | 10-90 | | |
| Gelatin | 0.25-2.5 | 0.25-2.5 | 0.25-2.5 | 0.25-2.5 | 0.25-2.5 | 0.25-2.5 | 0.25-2.5 | 0.25-2.5 |
| Starch | 0.50-6.0 | 0.50-6.0 | 0.50-6.0 | 0.50-6,0 | 0.50-6.0 | 0.50-6.0 | 0.50-6.0 | 0.50-6.0 |
| Gum Arabic | 0-0.5 | 0-0.5 | 0-0.5 | 0-0.5 | 0-0.5 | 0-0,5 | 0-0.5 | 0-0.5 |
| Vegetable Fat | 0.5-10.0 | 0.5-10.0 | 0.5-10.0 | 0.5-10.0- | 0.5-10.0 | 0.5-10.0 | 0.5-10.0 | 0.5-10.0 |
| Emulsifier | 0-0.5 | 0-0.5 | 0-0.5 | 0-0.5 | 0-0,5 | 0-0.5 | 0-0.5 | 0-0.5 |
| Salt | 0-0.3 | 0-0.3 | 0-0.3 | 0-0.3 | 0-0.3 | 0-0.3 | 0-0.3 | 0-0.3 |
| Flavor | 0.1-5.0 | 0.1-5.0 | 0.1-5.0 | 0.1-5.0 | 0.1-5.0 | 0.1-5.0 | 0.1-5.0 | 0.1-5.0 |
| WS3 | 0.0001-1.0 | | | | 0.0001-1.0 | | | |
| WS23 | | 0.0001-1.0 | | | | 0.0001-1.0 | | |
| Menthyl glutarate | | | 0.0001-1.0 | | | | 0.0001-1,0 | |
| Menthol | | | | 0.0001-1.0 | 0.0001-1.0 | 0.0001-1.0 | 0.0001-1.0 | |
| Color | 0.001-0.50 | 0.001-0.50 | 0.001-0.50 | 0.001-0.50 | 0.001-0.50 | 0.001-0.50 | 0.001-0.50 | 0.001-0.50 |
| Acesulfame K | 0.001-5.0 | | | 0.01-5.0 | | 0.001-5.0 | | 0.001-5.0 |
| Aspartame | | 0.001-5.0 | | 0.001-5.0 | 0.001-5.0 | | | 0.001-5.0 |
| Sucralose | | | 0.001-5.0 | | 0.001-5.0 | 0.001-5.0 | | 0.001-5.0 |

**Table 4: Coating Composition**

| **Ingredient** | **%w/w of Coating Composition** | | | | | | | |
|---|---|---|---|---|---|---|---|---|
| | **A** | **B** | **C** | **D** | **E** | **F** | **G** | **H** |
| Sugar | 90-99.9 | | | | 50-90 | | 90-99.9 | |
| Maltitol | | 90-99.9 | | | | | | 50-90 |
| Isomalt | | | 90-99.9 | | | 50-90 | | |
| Erythritol | | | | 90-99.9 | 50-90 | 50-90 | | 50-90 |
| Gum Arabic | 0-5.0 | 0-5.0 | 0-5.0 | 0.5.0 | 0-5.0 | 0-5.0 | 0-5.0 | 0-5.0 |
| Gelatine | 0-5.0 | 0-5.0 | 0-5.0. | 0-5.0 | 0-5.0 | 0-5.0 | 0-5.0 | 0-5.0 |
| Salt | 0-0.3 | 0-0.3 | 0-0.3 | 0-0.3 | 0-0.3 | 0-0.3 | 0-0.3 | 0-0.3 |
| Flavor | 0.1-5.0 | 0.1-5.0 | 0.1-5.0 | 0.1-5.0 | 0.1-5.0 | 0.1-5.0 | 0.1-5.0 | 0.1-5.0 |
| WS3 | 0.0001-1.0 | | | | 0.0001-1.0 | | | |
| WS23 | | 0.0001-1.0 | | | | 0.0001-1.0 | | |
| Menthyl glutarate | | | 0.0001-1.0 | | | | 0.0001-1.0 | |
| Menthol | | | | 0.0001-1.0 | 0.0001-1.0 | 0.0001-1.0 | 0.0001-1.0 | |
| Color | 0.001-0.50 | 0.001-0.50 | 0.001-0.50 | 0.001-0.50 | 0.001-0.50 | 0.001-0.50 | 0.001-0.50 | 0.001-0,50 |
| Acesulfame K | 0.001-5.0 | | | 0.01-5.0 | | 0.001-5.0 | | 0.001-5.0 |
| Aspartame | | 0.001- | | 0.001- | 0.001- | | | 0.001- |
| | | 5.0 | | 5.0 | 5.0 | | | 5.0 |
| Sucralose | | | 0.001-5.0 | | 0.001-5.0 | 0.001-5.0 | | 0.001-5.0 |
| Wax | 0-0.1 | 0-0.1 | 0-0.1 | 0-0.1 | 0-0.1 | 0-0.1 | 0-0.1 | 0-0.1 |

Confectionery pieces including a center-fill region, a confectionery region, and optionally a coating region are prepared according to the compositions in Tables 2, 3, and 4 above with each region according to the corresponding components for compositions A-H.

To prepare the center-fill compositions, the sugar/glucose and/or the hydrogenated starch hydrolysate (HSH) ingredients are combined in a mixing vessel and mixed until homogeneous. Next, the pectin is incorporated into the mixture. Then, the cooling compounds are solubilized in the flavor and added. Then, the color (if any), salt (if any), acid (if any) and high intensity sweetener (i.e. acesulfame K, aspartame and/or sucralose - if any) are added and mixed until the mixture is homogeneous. Lastly, the powdered polyol(s) is(are) added to the mixture and mixed until homogeneous.

To prepare the confectionery region, the glucose/sorbitol/erythritol/HSH are mixed with enough water to create a homogeneous mixture and the mixture is cooked to about 130C. Then, the fat, emulsifier, and color are added while the mixture is allowed to cool. When the mixture reaches about 90C, the hydrated gelatin/starch/gum arabic ingredients are added along with fat and emulsifier and mixed thoroughly. The mixture is then placed on a cooling table where flavor and acid are added. When the temperature of the mixture reaches about 65-70C, the fondant (if any) is incorporated. The mixture is then pulled to a desired consistency before being fed into a process for preparing a center-filled product.

The confectionery and liquid center-filled compositions are then extruded together and formed into a desired shape configuration. An optional coating composition as shown in Table 4 may be applied. The confectionery pieces each have a total weight of approximately 2 g. to 10g. In the final confectionery pieces, the confectionery region is about 55-65% by weight, the liquid-fill is about 0-20% by weight, and the coating is about 0-40% by weight.

### Examples 3

The following Examples A-H as set forth in Tables 5, 6, and 7 ate directed to center-fill chewing gum compositions that include a non-aldehyde cinnamon flavor composition of the invention. The inventive flavor systems can be included in any or all of the gum regions i.e. in the center fill, the gum and/or the coating,

**Table 5: Liquid Center-Fill Compositions**

| **Ingredient** | **%w/w of Center-Fill Composition** | | | | | | | |
|---|---|---|---|---|---|---|---|---|
| | **A** | **B** | **C** | **D** | **E** | **F** | **G** | **H** |
| Glycerin | 15-25 | 15-25 | 15-25 | 15-25 | 15-25 | 15-25 | 15-25 | 15-25 |
| Hydrogenated Starch Hydrolysate | 20-30 | 20-30 | 20-30 | 20-30 | 20-30 | 20-30 | 20-30 | 20-30 |
| Sorbitol Powder | 35-65 | | | 10-50 | | 10-50 | | |
| Xylitol Powder | | 35-65 | | 10-50 | 10-50 | | | 35-65 |
| Erythritol Powder | | | 35-65 | | 10-50 | 10-50 | 35-65 | |
| Flavor | 0.5-3.0 | 0.5-3.0 | 0.5-3.0 | 0.5-3.0 | 0.5-3.0 | 0.5-3.0 | 0.5-3.0 | 0.5-3.0 |
| WS3 | 0.01-0.50 | | | 0.01-0.50 | | 0.50 | | |
| WS23 | | 0.01-0.50 | | 0.01-0.50 | 0.01-0.50 | | | 0.01-0.50 |
| Menthyl glutarate | | | 0.01-0.50 | | 0.01-0.50 | 0.01-0.50 | | 0.01-0.50 |
| Menthol | 0.01-0.50 | | | 0.01-0.50 | 0.01-0.50 | | | 0.01-0.50 |
| Color | 0.01-0.50 | 0.01-0.50 | 0.01-0.50 | 0.01-0.50 | 0.01-0.50 | 0.01-4.50 | 0.01-0.50 | 0.01-0.50 |
| Acesulfame K | 0.005-1.5 | 0.005-1.5 | | 0.005-1.5 | | | 0.005-1.5 | |
| Aspartame | | | 0.005-1.5 | 0.005-1.5 | | | 0,005-1.5 | 0.005-1.5 |
| Sucralose | | 0.005-1.5 | | 0.005-1.5 | 0.005-1.5 | | | 0.005-1.5 |

**Table 6: Gum Region Compositions**

| **Ingredient** | **%w/w of Gum Region Composition** | | | | | | | |
|---|---|---|---|---|---|---|---|---|
| | **A** | **B** | | **D** | **E** | **F** | **G** | **H** |
| Gum Base | 20-30 | 20-30 | 20-30 | 20-30 | 20-30 | 20-30 | 20-30 | 20-30 |
| Glycerin | 2-15 | 2-15 | 2-15 | 2-15 | 2-15 | 2-15 | 2-15 | 2-15 |
| Maltitol Powder | 30-50 | 30-50 | 30-50 | 30-50 | 30-50 | 30-50 | 30-50 | 30-50 |
| Sorbitol Powder | 5-25 | 5-25 | 5-25 | 5-25 | 5-25 | 5-25 | 5-25 | 5-25 |
| Hydrogenated Starch Hydrolysate | 0.5-5.0 | 0.5-5.0 | 0.5-5.0 | 0.5-5.0 | 0.5-5.0 | 0.5-5.0 | 0.5-5.0 | 0.5-5.0 |
| Flavor | 1-15 | 1-15 | 1-15 | 1-15 | 1-15 | 1-15 | 1-15 | 1-15 |
| WS3 | 0.001-1.0 | | | | 0.001-1.0 | | | |
| WS23 | | 0.001-1.0 | | | | 0.001-1.0 | | |
| Menthyl glutarate | | | 0.001-1.0 | 0.001- | | | 0,001-1.0 | |
| Menthol | | | | 0.001-1.0 | 0.001-1.0 | 0.001-1.0 | 0.001- . 1.0 | |
| Color | 0.01-0.50 | 0.01-0.50 | 0.01-0.50 | 0.01-0.50 | 0.01-0.50 | 0.01-0.50 | 0.01-0.50 | 0.01-0.50 |
| Acesulfame K | 0.01-5.0 | | | 0.01-5.0 | | 0.01-5,0 | | 0.01-5.0 |
| Aspartame | | 0.01-5.0 | | 0.01-5.0 | 0.01-5.0 | | | 0.01-5.0 |
| Sucralose | | | 0.01-5.0 | | 0.01-5.0 | 0.01-5.0 | | 0.01-5.0 |

**Table 7: Coating Composition**

| **Ingredient** | **%w/w of Coating Composition** | | | | | | | |
|---|---|---|---|---|---|---|---|---|
| | **A** | **B** | **C** | **D** | **E** | **F** | **G** | **H** |
| Sugar | 90-99.9 | | | | 50-90 | | 90-99,9 | |
| Maltitol | | 90-99.9 | | | | | | 50-90 |
| Isomalt | | | 90-99.9 | | | 50-90 | | |
| Erythritol | | | | 90-99.9 | 50-90 | 50-90 | | 50-90 |
| Gum Arabic | 0-5.0 | 0-5.0 | 0-5.0 | 0-5.0 | 0-5.0 | 0-5,0 | 0-5.0 | 0-5.0 |
| Gelatine | 0-5.0 | 0-5.0 | 0-5.0 | 0-5.0 | 0-5.0 | 0-5.0 | 0-5.0 | 0-5.0 |
| Salt | 0.4.3 | 0-0.3 | 0-0.3 | 0-0.3 | 0-0.3 | 0-0.3 | 0-0.3 | 0-0.3 |
| Flavor | 0.1-5.0 | 0.1-5.0 | 0.1-5.0 | 0.1-5.0 | 0.1-5.0 | 0.1-5.0 | 0.1-5.0 | 0.1-5.0 |
| WS3 | 0.0001-1.0 | | | | 0.0001-1.0 | | | |
| WS23 | | 0.0001-1.0 | | | | 0.0001-1.0 | | |
| Menthyl glutarate | | | 0.0001-1.0 | | | | 0.0001-1.0 | |
| Menthol | | | | 0.0001-1.0 | 0.0001-1.0 | 0.0001-1.0 | 0.0001-1.0 | |
| Color | 0.001-0.50 | 0.001-0.50 | 0.001-0.50 | 0.001-0.50 | 0.001-0.50 | 0.001-0.50 | 0.001-0.50 | 0.001-0.50 |
| Acesulfame K | 0.001-5.0 | | | 0.01-5.0 | | 0.001-5.0 | | 0.001-5.0 |
| Aspartame | | 0.001-5.0 | | 0.001-5.0 | 0.001-5.0 | | | 4.001-5.0 |
| Sucralose | | | 0.001-5.0 | | 0.001-5.0 | 0.001-5.0 | | 0.001-5.0 |
| Wax | 0-0.1 | 0-0.1 | 0-0.1 | 0-0.1 | 0-0.1 | 0-0.1 | 0-0.1 | 0-0.1 |

Gum pieces including a center-fill region and a gum region are prepared according to the compositions in Tables 5 and 6 above with each region according to the corresponding components for compositions A-H,

To prepare the center-fill compositions, the Liquid glycerin and hydrogenated starch hydrolysate (HSH) ingredients are combined in a mixing vessel and mixed until homogeneous. Next, the cooling compounds are solubilized in the flavor and added to the glycerin/HSH mixture. Then, the color and high intensity sweetener (i.e. acesulfame K, aspartame and/or sucralose) are added to the mixture until the mixture is a uniform color. Lastly, the powdered polyol(s) is(are) added to the mixture and mixed until homogeneous.

To prepare the gum region, the gum base is melted in a mixer. The remaining ingredients are added to the molten gum base. The melted gum base with ingredients are mixed to completely disperse the ingredients. The resulting chewing gum composition may be allowed to cool or may be fed directly into a process for preparing a center-filled product

The chewing gum and liquid center-filled compositions are then extruded together and formed into tablets. An optional coating as shown in Table 7 may be applied. The gum pieces each have a total weight of approximately 2.2g. In the final gum pieces, the gum region is about 55-65% by weight, the liquid-fill is about 0-20% by weight, and the coating is about 20-40% by weight.

## Claims

1. A flavor composition comprising:
cinnamic aldehyde ethylene glycol acetal; and
at least one non-aldehyde cinnamyl compound selected from the group consisting of cinnamyl esters, cinnamyl acids, cinnamyl alcohols and combinations thereof,
wherein the composition is free of added aldehyde.

2. The composition of claim 1, further comprising a high intensity sweetener.

3. The composition of claim 2, wherein said high intensity sweetener is a natural, artificial or synthetic high intensity sweetener.

4. The composition of claim 2, wherein said high intensity sweetener is selected from the group consisting of alitame, neotame, aspartame, monellin, thaumatin, acesulfame potassium, saccharine, cyclamate, monatin, sucralose, and combinations thereof.

5. The composition of claim 1, wherein said cinnamyl esters are selected from the group consisting of cinnamyl acetate, cirmamyl butyrate, cinnamyl propionate, cinnamyl anthranilate, cinnamyl isobutyrate, cinnamyl cinnamate, cinnamyl isovalerate, propyl cinnamate, isopropyl cinnamate, phenethyl cinnamate, methyl cinnamate, ethyl cinnamate, cyclohexyl cinnamate, benzyl cinnamate, cinnamyl benzoate, cinnamyl phenylacetate, allyl cinnamate, butyl cinnamate, isobutyl cinnamate, isoamyl cinnamate, heptyl cinnamate, linalyl cinnamate, terpinyl cinnamate, 3-phenplpropyl cinnamate, amylcinnamyl acetate, amylcinnamyl isovalerate, 3-phenylpropyl acetate, 3-phenylpropyl propionate, 3-phenylpropyl isobutyrate, 3-phenylpropyl isovalerate, 3-phenylpropyl hexanoate, ethyl-3-phenylpropionate, ethyl-3-phenylpropionate and combinations thereof.

6. The composition of claim 1, wherein said cinnamyl acids are selected from the group consisting of cinnamic acid, 3-phenylpropionic acid and combinations thereof.

7. The composition of claim 1, wherein said cinnamyl alcohols are selected from C₆-C₁₂ cinnamyl alcohols.

8. The composition of claim 1, wherein said cinnamic aldehyde ethylene glycol acetal is present in an amount of about 10% to about 75% by weight of said composition.

9. The composition of claim 2, wherein said high intensity sweetener is present in an amount of about 0.001% to about 15% by weight of said composition.

10. The composition of claim 1, wherein said at least one non-aldehyde cinnamyl compound is present in amounts of about 20% to about 80% by weight of said composition.

11. The composition of claim 1, further comprising cinnamic aldehyde propylene glycol acetal.

12. The composition of claim 1, wherein said flavor composition is in a form selected from the group consisting of a powder, liquid, gel, emulsion or a solid matrix.

13. The composition of claim 2, wherein at least one of said cinnamic aldehyde ethylene glycol acetal, high intensity sweetener, and non-aldehyde cinnamyl compound is at least partially encapsulated.

14. The composition of claim 13, wherein the cinnamic aldehyde ethylene glycol acetal, high intensity sweetener, and the non-aldehyde cinnamyl compound are encapsulated together.

15. The composition of claim 1, further including a breath freshening agent.

16. The composition of claim 1, further comprising a sensate.

17. The composition of claim 16, whin said sensate is selected from the group consisting of cooling agents, warming agents, tingling agents, effervescing agents and combinations thereof.

18. The composition of claim 17. wherein said sensate comprises a cooling agent.

19. The composition of claim 1, wherein the flavor composition is adsorbed onto a solid carrier.

20. The composition of claim 1, further comprising an elastomer or confectionery carrier.

21. The flavor composition of claim 1, wherein:
said cinnamic aldehyde ethylene glycol acetals is present in an amount of about 10% to about 75% by weight of said composition; and
said at least one non-aldehyde cinnamyl compound is a mixture comprising cinnamyl alcohol, cinnamyl propionate, cinnamyl butyrate, cinnamic acid and cinnamyl acetate, said mixture being present in amounts of about 20% to about 80% by weight of said composition.

22. The composition of claim 21, further comprising a high intensity sweetener in an amount of about 0.001% to about 15% by weight of said composition.

23. The composition of Claim 21, wherein said cinnamyl alcohol is present in an amount of about 5-20% by weight of the flavor composition, said cinnamyl propionate is present in an amount of about 10-50% by weight of the composition, said cinnamyl butyrate is present in an amount of about 1-50% by weight of the composition, said cinnamic acid is present in amount of about 5-25% by weight of the composition and said cinnamyl acetate is present in an amount of about 2-15% by weight of the composition.

24. A comestible comprising a flavor composition, said flavor composition comprising:
cinnamic aldehyde ethylene glycol acetal; and
at least one non-aldehyde cinnamyl compound selected from the group consisting of cinnamyl esters, cinnamyl acids, cinnamyl alcohols and combinations thereof,
wherein the composition is free of added aldehyde.

25. The comestible of claim 24, further comprising a high intensity sweetener.

26. The comestible of claim 24, wherein the comestible is a confectionary composition and wherein the confectionary composition additionally comprises a carrier.

27. The composition of claim 26, further comprising a high intensity sweetener.

28. The composition of claim 26, wherein said carrier is present in amounts of from about 5% to about 95% by weight of said confectionery composition.

29. The composition of claim 26, wherein said flavor composition is present in amounts of about 0.01% to about 15% by weight of said confectionery composition.

30. The composition of claim 26, wherein the confectionery composition further comprises a core and a coating.

31. The composition of claim 30, wherein at least a portion of the flavor composition is located in the coating.

32. The composition of claim 26, wherein the confectionery composition further comprises a filling.

33. The composition of claim 32, wherein at least a portion of the flavor composition is located in the filling.

34. The composition of claim 26, wherein a portion of the flavor composition is located in a filling, a portion of the flavor composition is located in a core, and a portion of the flavor composition is located in a coating.

35. The composition of claim 26, wherein at least a portion of the flavor composition is included in a powdered compound applied to a surface of the confectionery.

36. The composition of claim 26, wherein said confectionery composition further comprises a sensate.

37. The composition of claim 36, wherein said sensate includes a cooling agent

38. The composition of claim 26, wherein said carrier includes an elastomer.

39. A method of preparing a confectionery composition, comprising the steps of
(a) providing a carrier;
(b) providing a flavor composition comprising cinnamic aldehyde ethylene glycol acetal, and at least one non-aldehyde cinnamyl compound selected from the group consisting of cinnamyl esters, cinnamyl acids, cinnamyl alcohols and combinations thereof; and
(c) mixing the flavor composition with the carrier to form a confectionery composition,
wherein the confectionery composition is free of added aldehyde.

40. The method of claim 39, wherein said flavor composition further comprises high intensity sweetener.

41. The method of claim 39, wherein said carrier includes an elastomer.

42. The method of claim 39, further comprising the step of encapsulating the flavor composition prior to mixing with the carrier.

43. The method of claim 39, further comprising the step of forming individual pieces of confectionery from the confectionery composition.

44. The method of claim 43, further comprising the step of applying a coating to the individual pieces of confectionery.

45. The method of claim 39, further comprising providing a core and a coating.

46. The method of claim 45, wherein at least a portion of the flavor composition is located in the coating.

47. The method of claim 39, wherein the composition further comprises a filling.

48. The method of claim 47, wherein at least a portion of the flavor composition is located in the filling.

49. The method of claim 39, further comprising applying at least a portion of the flavor composition in a powdered form to a surface of the confectionery.

50. A method or stabilizing a flavor composition, comprising the steps of:
(a) providing a flavor composition comprising:
i. cinnamic aldehyde ethylene glycol acetal; and
ii. at least one non-aldehyde cinnamyl compound selected from the group consisting of cinnamyl esters, cinnamyl acids, cinnamyl alcohols and combinations thereof; wherein the confectionery composition is free of added aldehyde;
(b) providing a high intensity sweetener; and
(c) combining said flavor composition with said high intensity sweetener to provide a flavor composition that is more stable than a flavor composition containing aldehyde.

## Patentansprüche

1. Aromazusammensetzung mit:
Zimtaldehydethylenglykolacetal; und
zumindest einer nicht-aldehydischen Cinnamylverbindung ausgewählt aus der Gruppe bestehend aus Cinnamylestern, Cinnamylsäuren, Cinnamylalkoholen und Kombinationen davon,
wobei die Zusammensetzung frei von zugesetztem Aldehyd ist.

2. Zusammensetzung nach Anspruch 1,
ferner mit einem intensitätsstarken Süßstoff.

3. Zusammensetzung nach Anspruch 2,
wobei der intensitätsstarke Süßstoff ein natürlicher, künstlicher oder synthetischer intensitätsstarker Süßstoff ist.

4. Zusammensetzung nach Anspruch 2,
wobei der intensitätsstarke Süßstoff ausgewählt ist aus der Gruppe bestehend aus Alitam, Neotam, Aspartam, Monellin, Thaumatin, Acesulfam-Kalium, Saccharin, Cyclamat, Monatin, Sucralose und Kombinationen davon.

5. Zusammensetzung nach Anspruch 1,
wobei die Cinnamylester ausgewählt sind aus der Gruppe bestehend aus Cinnamylacetat, Cinnamylbutyrat, Cinnamylpropionat, Cinnamylanthranilat, Cinnamylisobutyrat, Cinnamylcinnamat, Cinnamylisovalerat, Propylcinnamat, Isopropylcinnamat, Phenethylcinnamat, Methylcinnamat, Ethylcinnamat, Cyclohexylcinnamat, Benzylcinnamat, Cinnamylbenzoat, Cinnamylphenylacetat, Allylcinnamat, Butylcinnamat, Isobutylcinnamat, Isoamylcinnamat, Heptylcinnamat, Linalylcinnamat, Terpinylcinnamat, 3-Phenylpropylcinnamat, Amylcinnamylacetat, Amylcinnamylisovalerat, 3-Phenylpropylacetat, 3-Phenylpropylpropionat, 3-Phenylpropylisobutyrat, 3-Phenylpropylisovalerat, 3-Phenylpropylhexanoat, Methyl-3-phenylpropionat, Ethyl-3-phenylpropionat und Kombinationen davon.

6. Zusammensetzung nach Anspruch 1,
wobei die Cinnamylsäuren ausgewählt sind aus der Gruppe bestehend aus Zimtsäure, 3-Phenylpropionsäure und Kombinationen davon.

7. Zusammensetzung nach Anspruch 1,
wobei die Cinnamylalkohole ausgewählt sind aus C₆-C₁₂-Cinnamylalkoholen.

8. Zusammensetzung nach Anspruch 1,
wobei das Zimtaldehydethylenglykolacetal in einer Menge von etwa 10 Gew.-% bis etwa 75 Gew.-% der Zusammensetzung vorliegt.

9. Zusammensetzung nach Anspruch 2,
wobei der intensitätsstarke Süßstoff in einer Menge von etwa 0,001 Gew.-% bis etwa 15 Gew.-% der Zusammensetzung vorliegt.

10. Zusammensetzung nach Anspruch 1,
wobei die zumindest eine nicht-aldehydische Cinnamylverbindung in Mengen von etwa 20 Gew.-% bis etwa 80 Gew.-% der Zusammensetzung vorliegt.

11. Zusammensetzung nach Anspruch 1,
ferner mit Zimtaldehydpropylenglykolacetal.

12. Zusammensetzung nach Anspruch 1,
wobei die Aromazusammensetzung in einer Form vorliegt, die ausgewählt ist aus der Gruppe bestehend aus Pulver, Flüssigkeit, Gel, Emulsion oder einer festen Matrix.

13. Zusammensetzung nach Anspruch 2,
wobei zumindest eine von dem Zimtaldehydpropylenglycolacetal, dem intensitätsstarken Süßstoff und der nicht-aldehydischen Cinnamylverbindung zumindest teilweise verkapselt ist.

14. Zusammensetzung nach Anspruch 13,
wobei das Zimtaldehydpropylenglykolacetal, der intensitätsstarke Süßstoff und die nicht-aldehydische Cinnamylverbindung miteinander verkapselt sind.

15. Zusammensetzung nach Anspruch 1,
ferner mit einem Atemerfrischungsmittel.

16. Zusammensetzung nach Anspruch 1,
ferner mit einem gefühlserzeugenden Stoff.

17. Zusammensetzung nach Anspruch 16,
wobei der gefühlserzeugende Stoff ausgewählt ist aus der Gruppe bestehend aus kühlenden Mitteln, wärmenden Mitteln, prickelnden Mitteln, aufschäumenden Mitteln und Kombinationen davon.

18. Zusammensetzung nach Anspruch 17,
wobei der gefühlserzeugende Stoff ein kühlendes Mittel enthält.

19. Zusammensetzung nach Anspruch 1,
wobei die Aromazusammensetzung auf einem festen Träger adsorbiert ist.

20. Zusammensetzung nach Anspruch 1,
ferner mit einem Elastomer oder einem Süßwarenträger.

21. Aromazusammensetzung nach Anspruch 1, wobei:
das Zimtaldehydpropylenglykolacetal in einer Menge von etwa 10 Gew.-% bis etwa 75 Gew.-% der Zusammensetzung vorliegt; und
die zumindest eine nicht-aldehydische Cinnamylverbindung eine Mischung mit Cinnamylalkohol, Cinnamylpropionat, Cinnamylbutyrat, Zimtsäure und Cinnamylacetat ist, und die Mischung in Mengen von etwa 20 Gew.-% bis etwa 80 Gew.-% der Zusammensetzung vorliegt.

22. Zusammensetzung nach Anspruch 21,
ferner mit einem intensitätsstarken Süßstoff in einer Menge von etwa 0,001 Gew.-% bis etwa 15 Gew.-% der Zusammensetzung.

23. Zusammensetzung nach Anspruch 21,
wobei der Cinnamylalkohol in einer Menge von etwa 5-20 Gew.-% der Aromazusammensetzung vorliegt, das Cinnamylpropionat in einer Menge von etwa 10-50 Gew.-% der Zusammensetzung vorliegt, das Cinnamylbutyrat in einer Menge von etwa 1-50 Gew.-% der Zusammensetzung vorliegt, die Zimtsäure in einer Menge von etwa 5-25 Gew.-% der Zusammensetzung vorliegt, und das Cinnamylacetat in einer Menge von etwa 2-15 Gew.-% der Zusammensetzung vorliegt.

24. Lebensmittel mit einer Aromazusammensetzung, wobei die Aromazusammensetzung enthält:
Zimtaldehydpropylenglykolacetal; und
zumindest eine nicht-aldehydische Cinnamylverbindung ausgewählt aus der Gruppe bestehend aus Cinnamylestern, Cinnamylsäuren, Cinnamylalkoholen und Kombinationen davon, wobei die Zusammensetzung frei von zugesetztem Aldehyd ist.

25. Lebensmittel nach Anspruch 24,
ferner mit einem intensitätsstarken Süßstoff.

26. Lebensmittel nach Anspruch 24,
wobei das Lebensmittel eine Süßwarenzusammensetzung ist, und
wobei die Süßwarenzusammensetzung zusätzlich einen Träger enthält.

27. Zusammensetzung nach Anspruch 26,
ferner mit einem intensitätsstarken Süßstoff.

28. Zusammensetzung nach Anspruch 26,
wobei der Träger in Mengen von etwa 5 Gew.-% bis etwa 95 Gew.-% der Süßwarenzusammensetzung vorliegt.

29. Zusammensetzung nach Anspruch 26,
wobei die Aromazusammensetzung in Mengen von etwa 0,01 Gew.-% bis etwa 15 Gew.-% der Süßwarenzusammensetzung vorliegt.

30. Zusammensetzung nach Anspruch 26,
wobei die Süßwarenzusammensetzung ferner einen Kern und eine Beschichtung aufweist.

31. Zusammensetzung nach Anspruch 30,
wobei zumindest ein Teil der Aromazusammensetzung in der Beschichtung vorliegt.

32. Zusammensetzung nach Anspruch 26,
wobei die Süßwarenzusammensetzung ferner eine Füllung enthält.

33. Zusammensetzung nach Anspruch 32,
wobei zumindest ein Teil der Aromazusammensetzung in der Füllung vorliegt.

34. Zusammensetzung nach Anspruch 26,
wobei ein Teil der Aromazusammensetzung in einer Füllung vorliegt, ein Teil der Aromazusammensetzung in einem Kern vorliegt, und ein Teil der Aromazusammensetzung in einer Beschichtung vorliegt.

35. Zusammensetzung nach Anspruch 26,
wobei zumindest ein Teil der Aromazusammensetzung in einer pulverförmigen Verbindung, die auf einer Oberfläche der Süßwaren aufgetragen ist, enthalten ist.

36. Zusammensetzung nach Anspruch 26,
wobei die Süßwarenzusammensetzung ferner einen gefühlserzeugenden Stoff enthält.

37. Zusammensetzung nach Anspruch 36,
wobei der gefühlserzeugende Stoff ein kühlendes Mittel enthält.

38. Zusammensetzung nach Anspruch 26,
wobei der Träger ein Elastomer enthält.

39. Verfahren zum Herstellen einer Süßwarenzusammensetzung, mit den Schritten:
(a) Bereitstellen eines Trägers;
(b) Bereitstellen einer Aromazusammensetzung mit Zimtaldehydpropylenglykolacetal und zumindest einer nicht-aldehydischen Cinnamylverbindung ausgewählt aus der Gruppe bestehend aus Cinnamylestern, Cinnamylsäuren, Cinnamylalkoholen und Kombinationen davon; und
(c) Vermischen der Aromazusammensetzung mit dem Träger, um eine Süßwarenzusammensetzung zu bilden,
wobei die Süßwarenzusammensetzung frei von zugesetztem Aldehyd ist.

40. Verfahren nach Anspruch 39,
wobei die Aromazusammensetzung ferner einen intensitätsstarken Süßstoff enthält.

41. Verfahren nach Anspruch 39,
wobei der Träger ein Elastomer enthält.

42. Verfahren nach Anspruch 39,
ferner mit dem Schritt des Verkapselns der Aromazusammensetzung vor dem Vermischen mit dem Träger.

43. Verfahren nach Anspruch 39,
ferner mit dem Schritt des Bildens einzelner Süßwarenstücke aus der Süßwarenzusammensetzung.

44. Verfahren nach Anspruch 43,
ferner mit dem Schritt des Auftragens einer Beschichtung auf die einzelnen Süßwarenstücke.

45. Verfahren nach Anspruch 39,
ferner mit dem Bereitstellen eines Kerns und einer Beschichtung.

46. Verfahren nach Anspruch 45,
wobei zumindest ein Teil der Aromazusammensetzung in der Beschichtung vorliegt.

47. Verfahren nach Anspruch 39,
wobei die Zusammensetzung ferner eine Füllung enthält.

48. Verfahren nach Anspruch 47,
wobei zumindest ein Teil der Aromazusammensetzung in der Füllung vorliegt.

49. Verfahren nach Anspruch 39,
ferner mit dem Auftragen zumindest eines Teils der Aromazusammensetzung in einer pulvrigen Form auf eine Oberfläche der Süßwaren.

50. Verfahren zum Stabilisieren einer Aromazusammensetzung, mit den Schritten:
(a) Bereitstellen einer Aromazusammensetzung mit:
i. Zimtaldehydpropylenglykolacetal; und
ii. zumindest einer nicht-aldehydischen Cinnamylverbindung ausgewählt aus der Gruppe bestehend aus Cinnamylestern, Cinnamylsäuren, Cinnamylalkoholen und Kombinationen davon;
wobei die Süßwarenzusammensetzung frei von zugesetztem Aldehyd ist;
(b) Bereitstellen eines intensitätsstarken Süßstoffes; und
(c) Vereinigen der Aromazusammensetzung mit dem intensitätsstarken Süßstoff, um eine Aromazusammensetzung bereitzustellen, die stabiler als eine Aromazusammensetzung ist, welche Aldehyd enthält.

## Revendications

1. Composition d'arôme comprenant :
de l'éthylène glycol acétal d'aldéhyde cinnamique ; et
au moins un composé de cinnamyle non aldéhyde choisi dans le groupe consistant en les esters de cinnamyle, les acides de cinnamyle, les alcools de cinnamyle, et leurs combinaisons,
où la composition est dépourvue d'aldéhyde ajouté.

2. Composition selon la revendication 1, comprenant en outre un édulcorant de haute intensité.

3. Composition selon la revendication 2, dans laquelle l'édulcorant de haute intensité est un édulcorant de haute intensité naturel, artificiel ou synthétique.

4. Composition selon la revendication 2, dans laquelle ledit édulcorant de haute intensité est choisi dans le groupe consistant en l'alitame, le néotame, l'aspartame, la monelline, la thaumatine, l'acésulfame de potassium, la saccharine, le cyclamate, la monatine, le sucralose, et leurs combinaisons.

5. Composition selon la revendication 1, dans laquelle lesdits esters de cinnamyle sont choisis dans le groupe consistant en l'acétate de cinnamyle, le butyrate de cinnamyle, le propionate de cinnamyle, l'anthranilate de cinnamyle, l'isobutyrate de cinnamyle, le cinnamate de cinnamyle, l'isovalérate de cinnamyle, le cinnamate de propyle, le cinnamate d'isopropyle, le cinnamate de phénéthyle, le cinnamate de méthyle, le cinnamate d'éthyle, le cinnamate de cyclohexyle, le cinnamate de benzyle, le benzoate de cinnamyle, le phénylacétate de cinnamyle, le cinnamate d'allyle, le cinnamate de butyle, le cinnamate d'isobutyle, le cinnamate d'isoamyle, le cinnamate d'heptyle, le cinnamate de linalyle, le cinnamate de terpinyle, le cinnamate de 3-phénylpropyle, l'acétate d'amylcinnamyle, l'isovalérate d'amylcinnamyle, l'acétate de 3-phénylpropyle, le propionate de 3-phénylpropyle, l'isobutyrate de 3-phénylpropyle, l'isovalérate de 3-phénylpropyle, l'hexanoate de 3-phénylpropyle, le 3-phénylpropionate de méthyle, le 3-phénylpropionate d'éthyle et leurs combinaisons.

6. Composition selon la revendication 1, dans laquelle lesdits acides de cinnamyle sont choisis dans le groupe consistant en l'acide cinnamique, l'acide 3-phénylpropionique et leurs combinaisons.

7. Composition selon la revendication 1, dans laquelle lesdits alcools de cinnamyle sont choisis parmi les alcools de cinnamyl en C₆ à C₁₂.

8. Composition selon la revendication 1, dans laquelle ledit éthylène glycol acétal d'aldéhyde cinnamique est présent dans une quantité d'environ 10 % à environ 75 % en poids de ladite composition.

9. Composition selon la revendication 2, dans laquelle ledit édulcorant de haute intensité est présent dans une quantité d'environ 0,001 % à environ 15 % en poids de ladite composition.

10. Composition selon la revendication 1, dans laquelle ledit au moins un composé de cinnamyle non aldéhyde est présent dans des quantités d'environ 20 % à environ 80 % en poids de ladite composition.

11. Composition selon la revendication 1, comprenant en outre du propylène glycol acétal d'aldéhyde cinnamique.

12. Composition selon la revendication 1, dans laquelle ladite composition d'arôme est sous une forme choisie dans le groupe consistant en une poudre, un liquide, un gel, une émulsion ou une matrice solide.

13. Composition selon la revendication 2, dans laquelle au moins l'un dudit éthylène glycol acétal d'aldéhyde cinnamique, de l'édulcorant de haute intensité et du composé de cinnamyle non aldéhyde est au moins partiellement encapsulé.

14. Composition selon la revendication 13, dans laquelle ledit éthylène glycol acétal d'aldéhyde cinnamique, l'édulcorant de haute intensité et le composé de cinnamyle non aldéhyde sont encapsulés ensemble.

15. Composition selon la revendication 1, incluant en outre un agent de rafraîchissement de l'haleine.

16. Composition selon la revendication 1, comprenant en outre un agent sensitif.

17. Composition selon la revendication 16, dans laquelle ledit agent sensitif est choisi dans le groupe consistant en les agents rafraîchissants, les agents réchauffants, les agents piquants, les agents effervescents et leurs combinaisons.

18. Composition selon la revendication 17, dans laquelle ledit agent sensitif comprend un agent rafraîchissant.

19. Composition selon la revendication 1, dans laquelle la composition d'arôme est adsorbée sur un support solide.

20. Composition selon la revendication 1, comprenant en outre un élastomère ou support de confiserie.

21. Composition d'arôme selon la revendication 1, dans laquelle :
ledit éthylène glycol acétal d'aldéhyde cinnamique est présent dans une quantité d'environ 10 % à environ 75 % en poids de ladite composition ; et
ledit au moins un composé de cinnamyle non aldéhyde est un mélange comprenant de l'alcool de cinnamyle, du propionate de cinnamyle, du butyrate de cinnamyle, de l'acide cinnamique et de l'acétate de cinnamyle, ledit mélange étant présent dans des quantités d'environ 20 % à environ 80 % en poids de ladite composition.

22. Composition selon la revendication 21, comprenant en outre un édulcorant de haute intensité dans une quantité d'environ 0,001 % à environ 15 % en poids de ladite composition.

23. Composition selon la revendication 21, dans laquelle ledit alcool de cinnamyle est présent dans une quantité d'environ 5 à 20 % en poids de la composition d'arôme, ledit propionate de cinnamyle est présent dans une quantité d'environ 10 à 50 % en poids de la composition, ledit butyrate de cinnamyle est présent dans une quantité d'environ 1 à 50 % en poids de la composition, ledit acide cinnamique est présent dans une quantité d'environ 5 à 25 % en poids de la composition et ledit acétate de cinnamyle est présent dans une quantité d'environ 2 à 15 % en poids de la composition.

24. Produit comestible comprenant une composition d'arôme, ladite composition d'arôme comprenant :
de l'éthylène glycol acétal d'aldéhyde cinnamique ; et
au moins un composé de cinnamyle non aldéhyde choisi dans le groupe consistant en les esters de cinnamyle, les acides de cinnamyle, les alcools de cinnamyle, et leurs combinaisons,
où la composition est dépourvue d'aldéhyde ajouté.

25. Produit comestible selon la revendication 24, comprenant en outre un édulcorant de haute intensité.

26. Produit comestible selon la revendication 24, dans lequel le produit comestible est une composition de confiserie et dans lequel la composition de confiserie comprend en outre un support.

27. Composition selon la revendication 26, comprenant en outre un édulcorant de haute intensité.

28. Composition selon la revendication 26, dans laquelle ledit support est présent dans des quantités d'environ 5 % à environ 95 % en poids de ladite composition de confiserie.

29. Composition selon la revendication 26, dans laquelle ladite composition d'arôme est présente dans des quantités d'environ 0,01 % à environ 15 % en poids de ladite composition de confiserie.

30. Composition selon la revendication 26, dans laquelle la composition de confiserie comprend en outre un coeur et un enrobage.

31. Composition selon la revendication 30, dans laquelle au moins une partie de la composition d'arôme est située dans l'enrobage.

32. Composition selon la revendication 26, dans laquelle la composition de confiserie comprend en outre une charge.

33. Composition selon la revendication 32, dans laquelle au moins une partie de la composition d'arôme est située dans la charge.

34. Composition selon la revendication 26, dans laquelle une partie de la composition d'arôme est située dans une charge, une partie de la composition d'arôme est située dans un coeur, et une partie de la composition d'arôme est située dans un enrobage.

35. Composition selon la revendication 26, dans laquelle au moins une partie de la composition d'arôme est incluse dans un composé en poudre appliqué à une surface de la confiserie.

36. Composition selon la revendication 26, dans laquelle la composition de confiserie comprend en outre un agent sensitif.

37. Composition selon la revendication 36, dans laquelle ledit agent sensitif inclut un agent rafraîchissant.

38. Composition selon la revendication 26, dans laquelle ledit support inclut un élastomère.

39. Procédé de préparation d'une composition de confiserie, comprenant les étapes consistant à :
(a) fournir un support ;
(b) fournir une composition d'arôme comprenant de l'éthylène glycol acétal d'aldéhyde cinnamique, au moins un composé de cinnamyle non aldéhyde choisi dans le groupe consistant en les esters de cinnamyle, les acides de cinnamyle, les alcools de cinnamyle, et leurs combinaisons ; et
(c) mélanger la composition d'arôme avec le support pour former une composition de confiserie,
où la composition de confiserie est dépourvue d'aldéhyde ajouté.

40. Procédé selon la revendication 39, dans lequel ladite composition d'arôme comprend en outre un édulcorant de haute intensité.

41. Procédé selon la revendication 39, dans lequel ledit support inclut un élastomère.

42. Procédé selon la revendication 39, comprenant en outre l'étape consistant à encapsuler la composition d'arôme avant mélange avec le support.

43. Procédé selon la revendication 39, comprenant en outre l'étape de formation de pièces individuelles de confiserie à partir de la composition de confiserie.

44. Procédé selon la revendication 43, comprenant en outre l'étape consistant à appliquer un enrobage aux pièces individuelles de confiserie.

45. Procédé selon la revendication 39, comprenant en outre l'étape consistant à fournir un coeur et un enrobage.

46. Procédé selon la revendication 45, dans lequel au moins une partie de la composition d'arôme est située dans l'enrobage.

47. Procédé selon la revendication 39, dans lequel la composition comprend en outre une charge.

48. Procédé selon la revendication 47, dans lequel au moins une partie de la composition d'arôme est située dans la charge.

49. Procédé selon la revendication 39, comprenant en outre l'étape consistant à appliquer au moins une partie de la composition d'arôme sous forme de poudre à une surface de la confiserie.

50. Procédé de stabilisation d'une composition d'arôme, comprenant les étapes consistant à :
(a) fournir une composition d'arôme comprenant :
i. de l'éthylène glycol acétal d'aldéhyde cinnamique ; et
ii. au moins un composé de cinnamyle non aldéhyde choisi dans le groupe consistant en les esters de cinnamyle, les acides de cinnamyle, les alcools de cinnamyle, et leurs combinaisons ; où la composition de confiserie est dépourvue d'aldéhyde ajouté ;
(b) fournir un édulcorant de haute intensité ; et
(c) combiner ladite composition d'arôme avec ledit édulcorant de haute intensité pour fournir une composition d'arôme qui est plus stable qu'une composition d'arôme contenant de l'aldéhyde.
